# EUROPEAN PATENT SPECIFICATION

(11) **EP 3 689 206 B1**
(45) Date of publication and mention of the grant of the patent: **07.10.2026**
(21) Application number: 19218218.6
(22) Date of filing: 09.08.2018
(51) Int. Cl.: A47J 43/07, A47J 37/06

(54) **COOKING DEVICE AND COMPONENTS THEREOF**
GARGERÄT UND KOMPONENTEN DAVON
DISPOSITIF DE CUISSON ET SES COMPOSANTS

(30) Priority: 09.08.2017 US 201762543082 P
(43) Date of publication of application: 05.08.2020
(62) Document number(s) of the earlier application(s) in accordance with Art. 76 EPC: 18759828.9 / 3 624 654
(73) Proprietor: SharkNinja Operating LLC, Needham, MA 02494 (US)
(72) Inventor: GILL, Aaron Michael, Needham, MA 02494 (US); RICHARDSON, Ross, Dover, MA Massachusetts 02030 (US); ZABEL, Naomi Kalia Williams, Oakland, MA Massachusetts 94618 (US); DENG, Da, Newton, MA Massachusetts 02458 (US); GURSEL, Mete, 34000 Istanbul (TR); TATTERSFIELD, Andrew John Roy, London, SW2 1EW (GB); DENHAM, Niall Christopher, London, SE27 0SH (GB); JACKSON, Roger Neil, Launceton, Cornwall PL15 9PU (GB); LEAHY, Ronan Patrick, London, SW4 0HF (GB); WHITE, Evan James, Brookline, MA Massachusetts 02445 (US); GUERIN, Thomas, Boston, MA Massachusetts 02127 (US); MARTIN, Chris, Concord, MA Massachusetts 01742 (US); LAVINS, Nathaniel R., Somerville, MA Massachusetts 02144 (US); SWANHART, Mackenzie Lee, Boston, MA Massachusetts 02446 (US); FERGUSON, Samuel Andrew, Medford, MA Massachusetts 02155 (US); STEWART, Scott James, Boston, MA Massachusetts 02115 (US)
(74) Representative: Kilburn & Strode LLP

(56) References cited:
- EP-A1- 2 904 953
- EP-A1- 3 165 134
- US-A- 5 526 734
- US-A1- 2013 001 220
- US-A1- 2015 313 399

## Description

### BACKGROUND

Embodiments of the present disclosure relates generally to a cooking device and components thereof, and more specifically, a multifunction device configured to perform the operation of a plurality of distinct cooking devices, the multifunctional cooking device optionally employing various components for cooking in the distinct cooking modes.

Conventional cooking devices, such as pressure cookers and air fryers each perform a single cooking operation, and as such, these devices employ different components and method for cooking food items. As such, multiple devices are required to perform various cooking operations. For consumers that wish to enjoy food cooked in different ways via different operations, an accumulation of these devices can occur. Such an accumulation of cooking devices is often prohibitive from a standpoint of cost and storage space. For at least these reasons, it would be desirable to integrate the functionality of several cooking devices into a single user-friendly cooking device.

EP3165134 A1 discloses a food steamer having a control unit that deactivates the boiler when the lid is removed from the cooking container.

US 5,526,734A discloses a bagel cooking apparatus which includes a casing divided into a lower zone in which uncooked bagels can be boiled and an upper, oven zone for subsequently baking the boiled bagels.

### SUMMARY

In accordance with the present invention there is provided a cooking system as defined in claim 1. Optional features are set out in the dependent claims.

Disclosed herein is a cooking system for cooking food, the system including a housing having a hollow interior, a lid movable relative to the housing, at least one heating element associated with one of the housing and the lid, wherein the cooking system is operable in a plurality of modes including a conductive cooking mode and a convective cooking mode, wherein in the conductive cooking mode the cooking system is operable as a conductive cooker and in the convective cooking mode the cooking system is operable as a convection cooker.

Also disclosed is a cooking system for cooking food, the cooking system being functional in a plurality of cooking modes, the cooking system including a housing having a hollow interior, a lid movable relative to the housing, at least one heating element disposed within one of the housing and the lid, and a rotational air movement device coupled to at least one of the housing and the lid, wherein during operation of the rotational air movement device, the rotational air movement device is operable to rotate at a plurality of speeds including first rotational speed and a second rotational speed, the second rotational speed being different than the first rotational speed.

Additionally disclosed is a cooking system for cooking food, the cooking system including a housing having a hollow interior, a lid movable between an open position and a closed position relative to the housing to selectively close an opening to the hollow interior, wherein in both the open position and the closed position, the lid is affixed to the housing, and at least one heating element disposed within one of the housing and the lid, wherein the cooking system is operable in a plurality of modes including a first mode and a second mode, during operation of the cooking system in the first mode, the lid is arranged in the closed position, and during operation of the cooking system in the second mode, the lid is arranged in the open position.

Further disclosed is a cooking system for cooking a food item, the cooking system including a housing having a hollow interior; a primary lid connectable to the housing, wherein when the primary lid is connected to the housing, the primary lid is arranged in contact with the housing, a secondary lid connectable to the housing, wherein when the secondary lid is connected to the housing, the secondary lid is arranged in contact with the housing, wherein the primary lid and the secondary lid are connectable to the housing simultaneously, and wherein at least one heating element is disposed within at least one of the housing, the primary lid, and the secondary lid.

Still further disclosed is a cooking system for cooking food, the cooking system being functional in a plurality of cooking modes, the cooking system including a housing having a hollow interior, a lid movable relative to the housing, at least one heating element disposed within one of the housing and the lid, an air movement device coupled to at least one of the housing and the lid to circulate air through the hollow interior, and an air diffuser configured to impart rotation to the air circulating through the hollow interior, wherein the air diffuser is arranged within the hollow interior during at least one of the plurality of cooking modes.

Also disclosed is an insert for disposal on a surface of a cooking system, the insert including a food support body including a first body surface and an opposing second body surface, at least one leg extending from the first body surface, and at least one leg extending from the second body surface, wherein the at least one leg extending from the first body surface extends a lesser distance from the food support body than the at least one leg extending from the second body surface extends from the food support body.

Additionally disclosed is a cooking system for cooking food, the cooking system being functional in a plurality of cooking modes, the cooking system including a housing having a hollow interior, a first heating element, a second heating element distinct from the first heating element, a first thermal cut off in communication with the first heating element, and a second thermal cut off in communication with the second heating element, wherein a triggering of the first thermal cut off terminates power to both the first heating element and the second heating element, and wherein a triggering of said second thermal cut off terminates power to both the first heating element and the second heating element.

Further disclosed is a cooking system for cooking food, the cooking system being functional in a plurality of cooking modes, the cooking system including a housing having a hollow interior, a first lid for use in at least a first cooking mode, a second lid for use in at least a second cooking mode, a first lid detection sensor configured to detect a closed condition between the first lid and the housing, a second lid detection sensor configured to detect a closed condition between the second lid and the housing.

In addition to one or more of the features described above, or as an alternative, in further embodiments.

### BRIEF DESCRIPTION OF THE FIGURES

The accompanying drawings incorporated in and forming a part of the specification embodies several aspects of the present disclosure and, together with the description, serves to explain the principles of the disclosure. In the drawings:
FIG. 1A is a perspective front view of the cooking system according to an embodiment;
FIG. 1B is a bottom view of the cooking system according to an embodiment;
FIG. 1C is a side by side front view the cooking system according to an embodiment;
FIG. 1D is a rear view of the cooking system according to an embodiment;
FIG. 2 is a perspective view of the cooking system having a lid in an open position according to an embodiment;
FIG. 3A is a cross-sectional view of the cooking system having a secondary lid according to an embodiment;
FIG. 3B is a front view of a cooking system having a secondary lid according to an embodiment;
FIG. 3C is a lower view of a lid of the cooking system according to an embodiment;
FIG. 4 is a perspective view of a cooking system having both a lid and a secondary lid in an open position according to an embodiment;
FIG. 5 is a perspective view of a cooking system having both a lid and a secondary lid in a closed position according to an embodiment;
FIG. 6A is a perspective view of a lid of the cooking system according to an embodiment;
FIG. 6B is another perspective view of a lid of the cooking system according to an embodiment;
FIG. 7 is a schematic diagram of the cooking system according to an embodiment
FIG. 8A is a perspective view of an air diffuser according to an embodiment;
FIG. 8B perspective lower view of an insert according to an embodiment;
FIG. 8C is a perspective view of an insert with attached diffuser according to an embodiment;
FIG. 8D is a side view of the insert according to an embodiment;
FIG. 9 is a perspective view of a diffuser received in a container according to an embodiment;
FIG. 10 is a perspective view of a cooking system having an insert positioned therein according to an embodiment; and
FIG. 11 is a cross-sectional view of the cooking system according to an embodiment;
FIG. 12 is a block diagram illustrating a control path for a cooking system according to an embodiment;
FIG. 13 is a perspective view of the cooking system having a lid in an open position according to an embodiment;
FIG. 14 is a perspective view of a cooking rack for use in a cooking system according to an embodiment;
FIG. 15 is a perspective view of the cooking rack received in the cooking system according to an embodiment;
FIG. 16 is another perspective view of the cooking rack for use in the cooking system according to an embodiment;
FIG. 17 is a perspective view of the cooking rack received in the cooking system according to an embodiment;
FIG. 18 is another perspective view of the cooking rack for use in the cooking system according to an embodiment;
FIG. 19 is a table showing cooking parameters for use in a cooking system according to an embodiment;
FIG. 20 is a circuit diagram for use in a cooking system according to an embodiment;
FIG. 21 is a logic diagram for use in a cooking system according to an embodiment;
FIGS. 22A-D is an upper view of a series of lid positions in a cooking system according to an embodiment;

The detailed description explains embodiments of the disclosure, together with advantages and features, by way of example with reference to the drawings.

### DETAILED DESCRIPTION

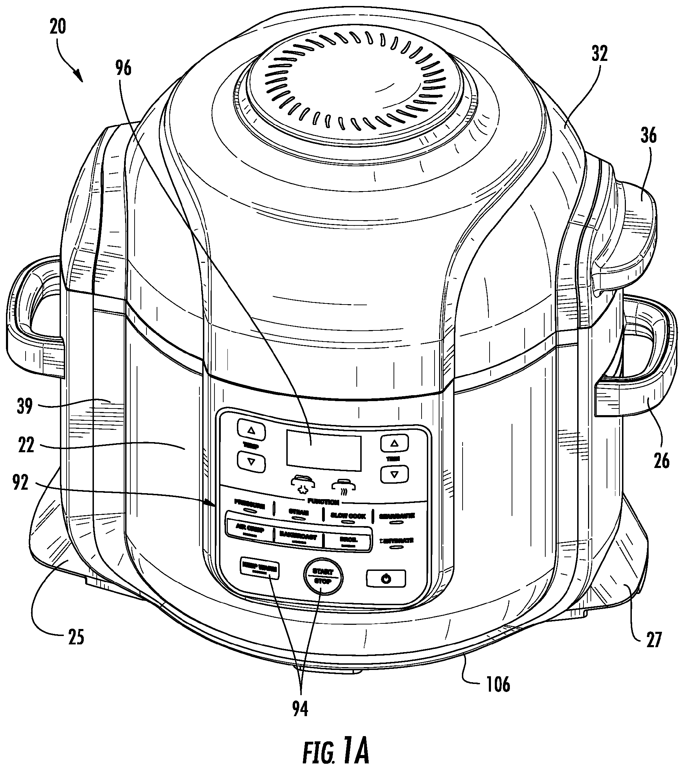

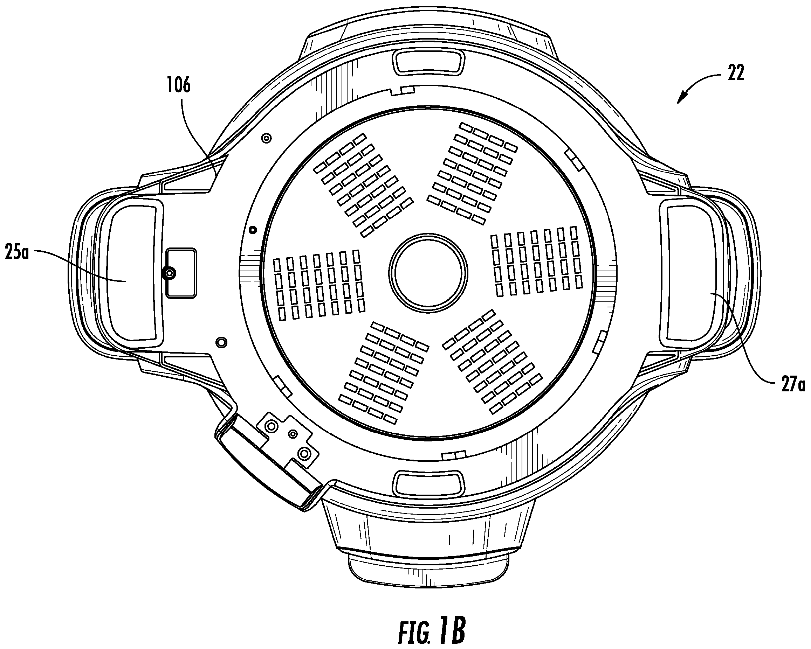

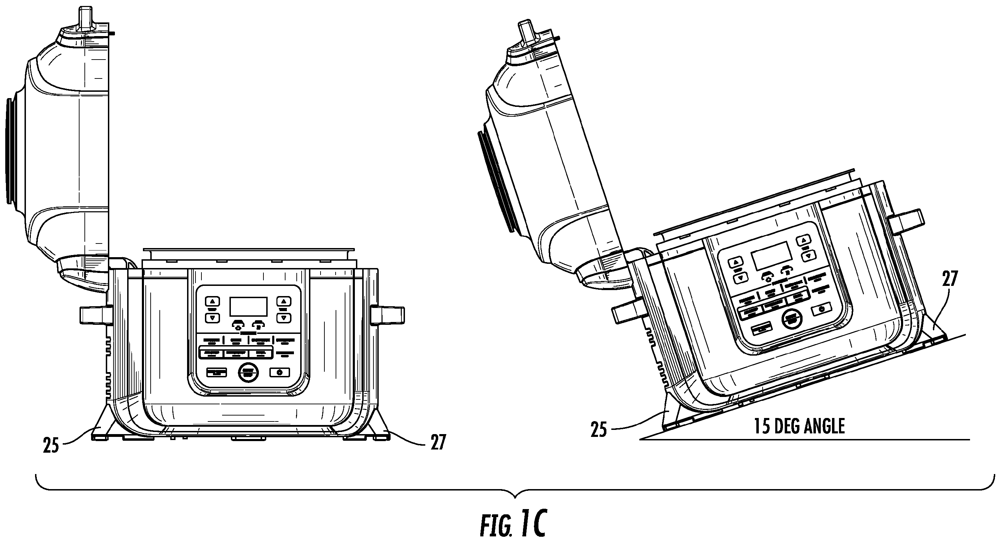

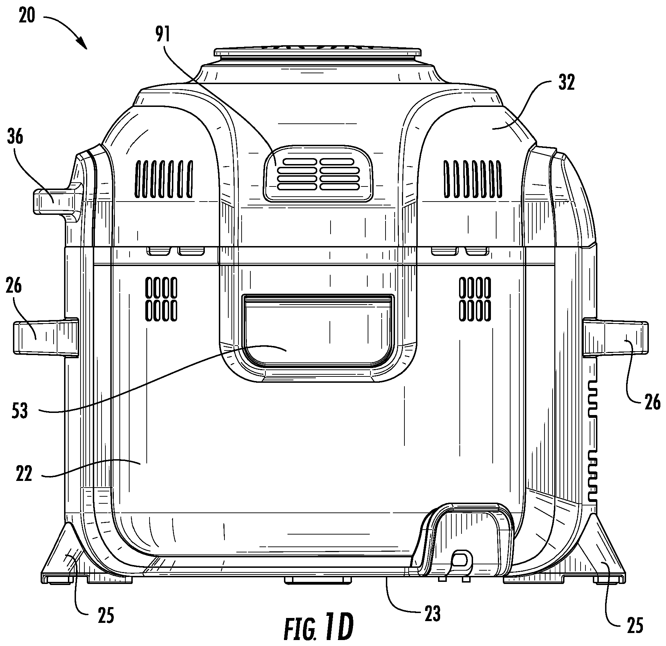

With reference first to FIGS. 1-7, a cooking system 20 configured to perform multiple cooking operations is illustrated. As shown, the cooking system 20 includes a housing 22 and a first or primary lid 32 permanently or removably attached, or more specifically hinged, to the housing 22. In an exemplary, non-limiting embodiment, the connection or hinge area between the lid 32 and the housing 22 occurs at an upper portion of a spine 39 of the housing 22. A bottom 106 of the housing 22 of the cooking system 20 (see FIG. 1B) may be supported on a surface by one or more feet 25 and 27, which may include shock absorbing pads 25a and 27a (of a material such as but not limited to rubber) at a bottom surface thereof. The feet 25, 27 may extend from the housing 22 to define a surface on which the cooking system 20 may contact an adjacent supporting surface, such as a countertop for example. The bottom surface of the feet 25, 27 or pads 25a, 27a may be flush with, or alternatively, may extend out of plane from the bottom 106 of the housing. In the illustrated, non-limiting embodiment, the housing 22 includes two feet 25, 27 arranged on opposing sides of the housing 22; however, it should be understood that a housing having any suitable number of feet 25 is within the scope of the disclosure.

Further, in the exemplary, non-limiting embodiment shown in at least FIGS. 1A-C, the foot 25 under the spine 39 is larger and extends out a greater distance from the side of the housing 22 than the foot 27. As shown in FIG. 1C, this allows for better support of the system 20 when the cooking system 20 is on a substantially flat surface or an inclined surface (up to 15 degrees in an exemplary embodiment) and the relatively heavy lid 32 is in an open position.

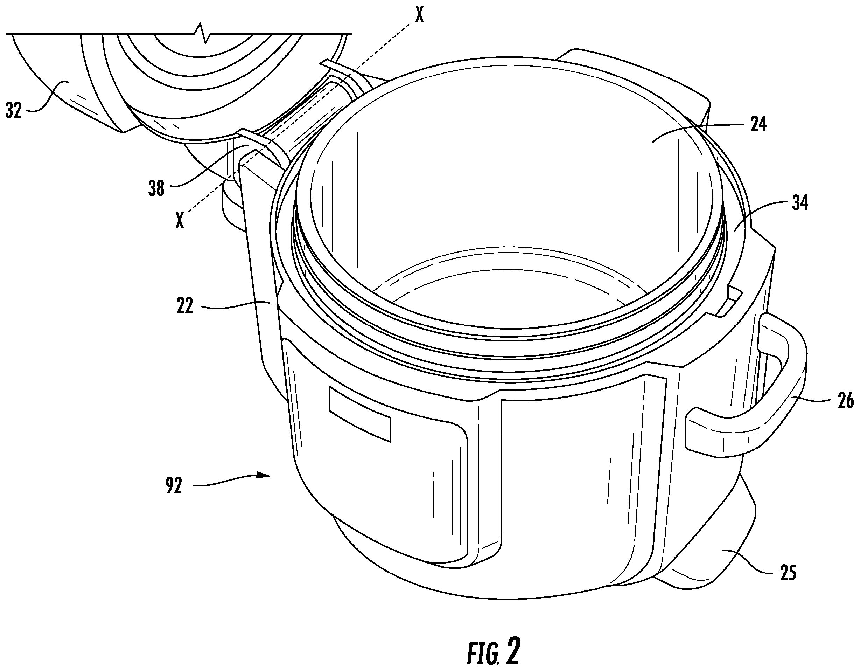

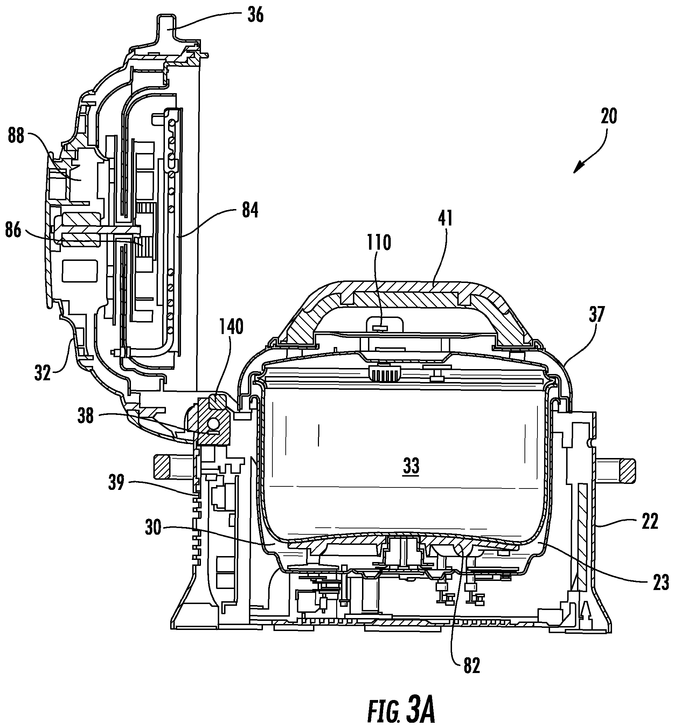

In the illustrated, non-limiting embodiment, one or more handles 26 extend outwardly from the exterior of the housing 22 to provide a user with a location to more easily grasp the system 20. Although two handles 26 are shown, embodiments having no handles, a single handle, or more than two handles are also within the scope of the disclosure. The housing 22 and/or the one or more handles 26 may be integrally or separately formed, such as from a molded plastic material for example. Referring now to some of the interior features of the system 20, an inner surface of the housing 22 defines a hollow interior 30. In an exemplary non-limiting embodiment, a liner 23 that may be formed from any suitable conductive material, such as aluminum for example is disposed within the hollow interior 30, and in some embodiments the liner 23 may be the inner surface defining the hollow interior (though surfaces inside the liner 23, such as the walls of the container, or outside the liner 23, such as plastic around the liner 23, may also define the hollow interior 30). In an exemplary, non-limiting embodiment, a food container 24 is receivable inside the hollow interior 30 defined by the liner 23. Spacing components, such as silicone bumpers (not shown) may be disposed along the inner surface of the liner 23 to keep the container 24 aligned properly within the hollow interior 30 during cooking. Although the container 24 is described herein as being removable from the housing 22, embodiments where the container 24 is integrally formed with the housing 22 are also contemplated herein. The container 24, which is shown in FIGS. 2 and 3A, has an interior 33 designed to receive and retain one or more consumable products, such as food products for example, therein. Examples of food products suitable for use with the cooking system 20, include but are not limited to, meats, fish, poultry, bread, rice, grains, pasta, vegetables, fruits, and dairy products, among others. The container 24 may be a pot formed from a ceramic, metal, or die cast aluminum material. In an embodiment, an interior surface of the container 24 includes a nano ceramic coating and an exterior surface of the container 24 includes a silicone epoxy material. However, any suitable material capable of withstanding the high temperatures and pressures required for cooking food products is contemplated herein.

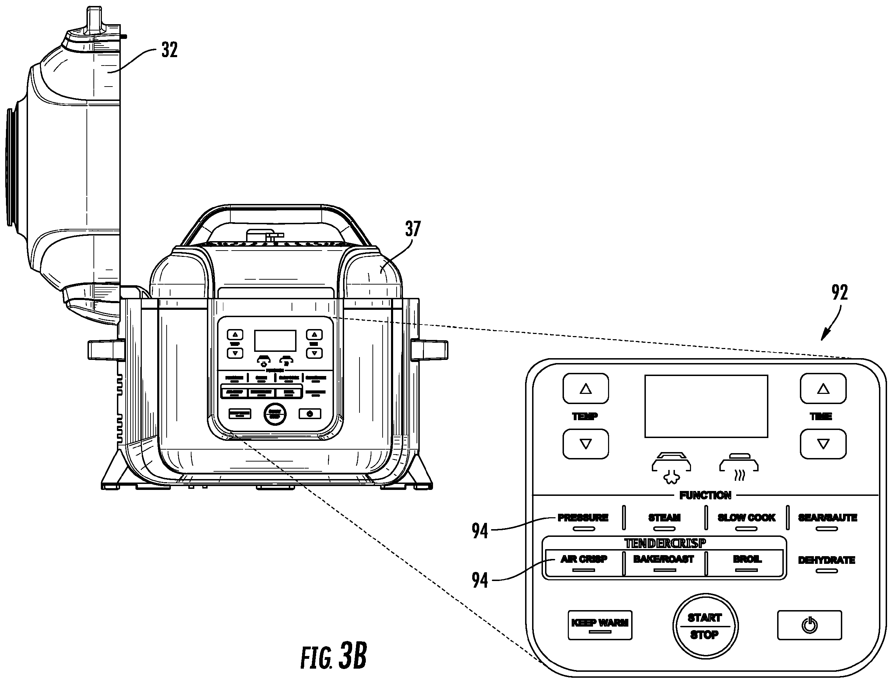

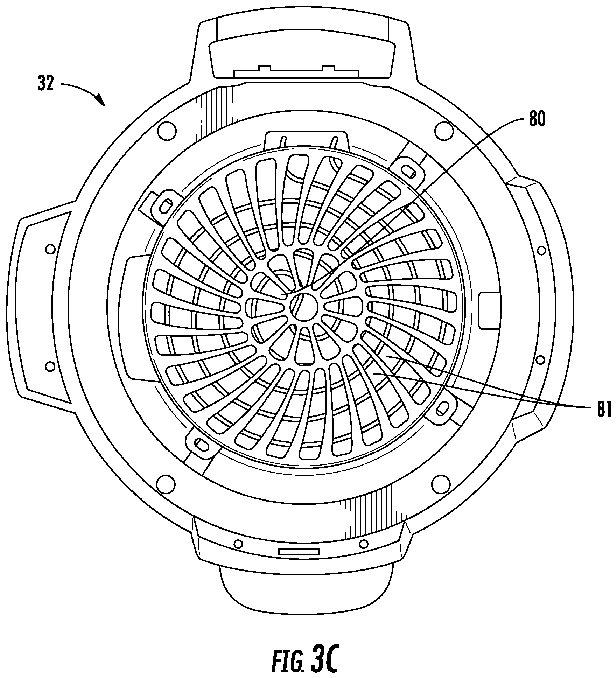

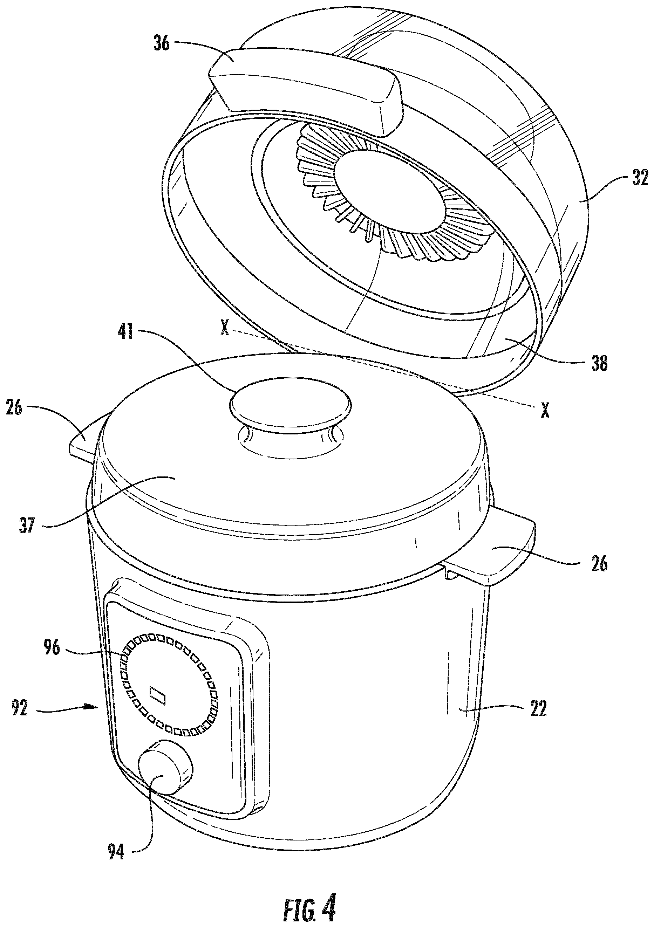

Referring with more detail not to the lid 32, it should be noted that the lid 32 is connectable to a surface of the container 24 and/or housing 22 to close off entry to the hollow interior 30 of the container 24. In an embodiment, a diameter of the lid 32 is generally complementary to a diameter of the housing 22 such that the lid 32 covers not only the container 24, but also an upper surface 34 of the housing 22. The lid 32 can be made of any suitable material, such as glass, aluminum, plastic, or stainless steel for example. Further, the lid 32 may, but need not, include one or more handles 36 for removably coupling the lid 32 to the remainder of the cooking system 20. In the illustrated, non-limiting embodiment, the lid 32 is coupled to the housing 22 via a hinge 38 (best shown in FIG. 3A just above the spine 39), such that the lid 32 is rotatable about an axis X between an open position (FIG. 3) and a closed position (FIG. 1A). In such embodiments, the hinge axis X may be located at a side surface of the cooking system 20, as shown in FIG.2, or alternatively, at a back surface of the cooking system 20, such as vertically disposed relative to one or more handles 26 of the housing 22, as shown in FIG. 4. However, embodiments where the lid 32 is separable from the housing 22, or movable between the open and closed positions in another manner are also contemplated herein. One or more fastening mechanisms (not shown) may, but need not be used to secure the lid 32 to the housing 22 when the lid 32 is in the closed position. Any suitable type of fastening mechanism capable of withstanding the heat associated with the cooking system 20 is considered within the scope of the disclosure. In an embodiment, best shown in FIGS. 3A-C, 4-5, and 6A-B, the cooking system 20 additionally includes a secondary lid 37 configured to removably couple to the housing 22 and/or container 24 to seal the hollow interior 30. In an embodiment, the secondary lid 37 is press-fit onto an upper surface 34 of the housing 22 or directly to the container 24. In another embodiment, the secondary lid 37 is configured to thread-ably couple to the upper surface 34 of the housing 22 or the container 24. However, embodiments where the secondary lid 37 is configured to couple to at least one of the housing 22 and container 24 in another suitable manner, such as via a pressure tight mechanism for example, are also contemplated herein. The secondary lid 37 can be made of any suitable material, such as glass, aluminum, plastic, or stainless steel, or any combination thereof for example. In an embodiment, the secondary lid 37 is formed from a molded plastic material. In addition, the secondary lid 37 may, but need not, include one or more handles 41 for removably coupling the secondary lid 37 to the cooking system 20. The handle 41 may be integrally formed with the remainder of the lid 37, such as via a molding process, or alternatively, may be a separate component coupled to the lid 37.

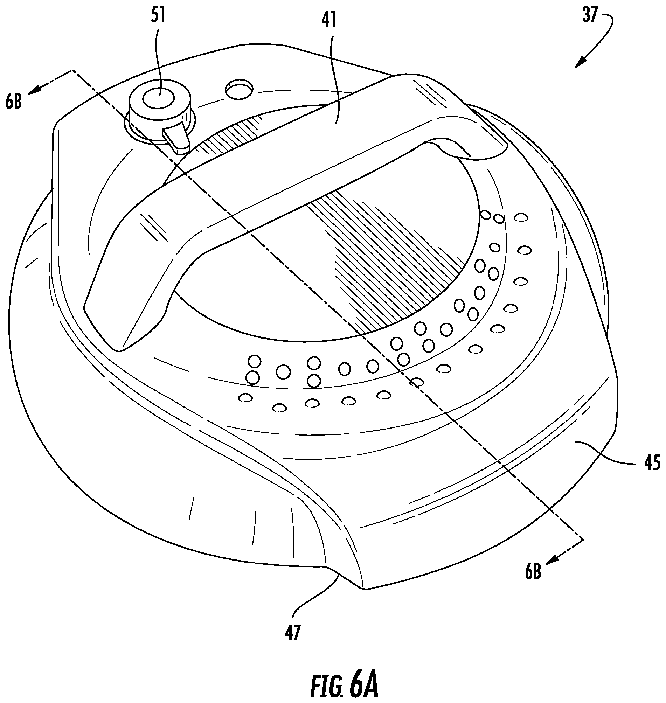

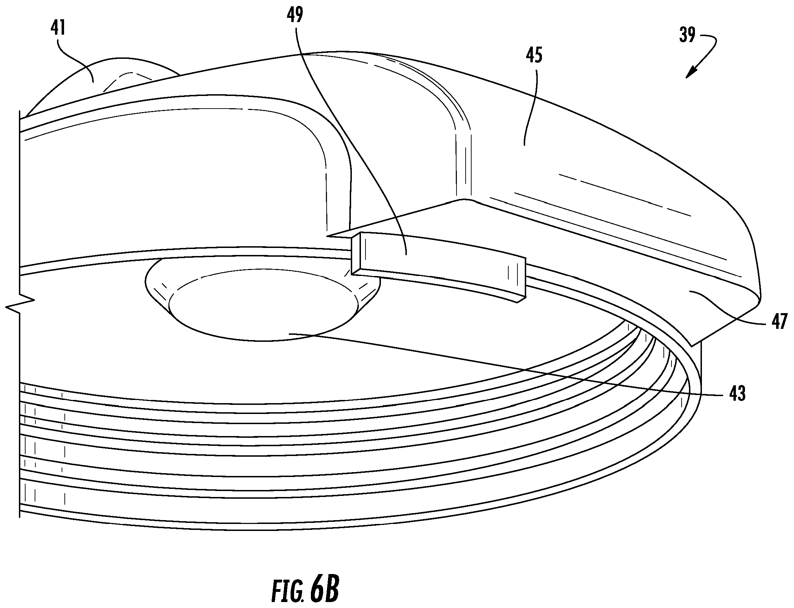

As best shown in FIG. 6B, the secondary lid 37 includes an interior liner 43, also referred to as an "underliner" formed from any suitable material, such as stainless steel for example. In an embodiment, one or more threads may be formed in the underliner 43 to couple the lid 37 to an end of the container 24. As shown, the lid 37 may additionally include a lid support ring 45 having a diameter extending beyond the outer diameter of the underliner 43 about at least a portion of the circumference thereof. In an embodiment, a surface 47 of the lid support ring 45 may be configured to abut the upper surface 34 of the housing 22 when the secondary lid 37 is coupled to the container 24. A lid cushion 49, such as formed from a resilient or elastomeric material, such as rubber for example, may be disposed at an exterior surface of a portion of the lid 37, such as between the under-liner 43 and the lid support ring 45 for example. Further, a pressure relief valve 51 (see FIG. 6A) is formed in a surface of the secondary lid, such as the upper surface thereof for example. The pressure relief valve is configured to automatically open to release air from within the chamber formed between the secondary lid 37 and the container 24 when the pressure therein exceeds a predetermined threshold. Alternatively, or in addition, the pressure relief valve is manually operable to release air from within the chamber formed between the secondary lid 37 and the container 24.

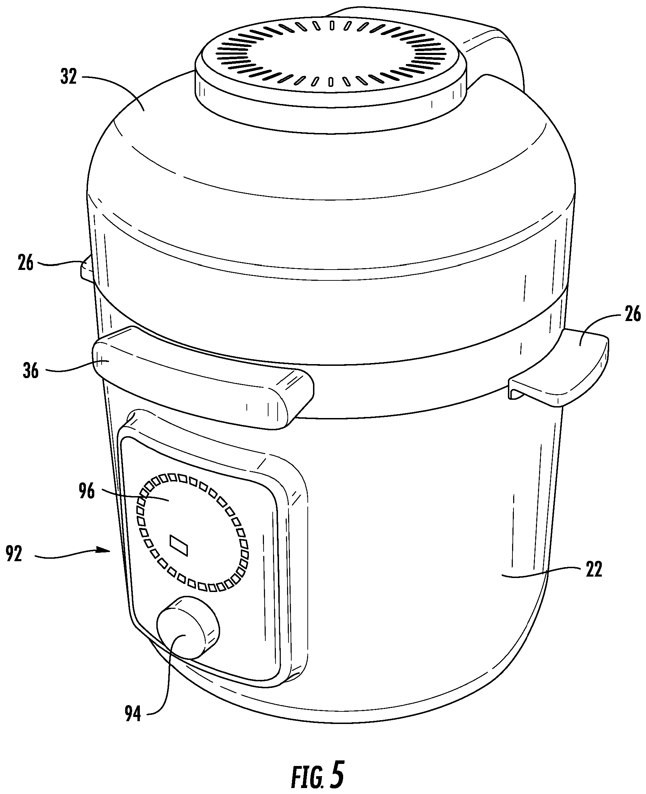

To couple the secondary lid 37 to the housing 22, the primary lid 32 must be in an open position, as shown in FIGS. 3A and 3B. Further, in an embodiment, the primary lid 32 is not movable to the closed position relative to the housing 22 when the secondary lid 37 is affixed thereto. This may be due to the outer diameter of the secondary lid 37, or alternatively, because one or more components extending upwardly from the lid 37, such as handle 41, would interfere with a portion of the primary lid 32. However, in other embodiments, as shown in FIGS. 4 and 5, at least a portion of the secondary lid 37 may be nestable or receivable within the primary lid 32. In such embodiments, the outer diameter of the secondary lid 37 may be smaller than the inner diameter of the primary lid 32, such that the primary lid 32 substantially surrounds the secondary lid 37 when in the closed position. Accordingly, the enclosure defined by the hollow interior 30 of the container 24 and the secondary lid 37 is smaller than the enclosure formed by the hollow interior 30 of the container 24 and the primary lid 32. Although the cooking system 20 is illustrated and described herein including the secondary lid 37, it should be understood that in some embodiments the cooking system 20 includes only a primary lid 32 and does not include a secondary lid 37.

With reference again to FIG. 2, a condensation rim may be formed in the upper surface 34 of the housing 22, radially outward of the opening and/or container 24. During operation of the cooking system 20, condensation or other fluid circulating within the container 24 and/or hollowed interior 30 of the system 20 may collect within the condensation rim. In an embodiment, best shown in FIG. 1D, a condensation tray 53 is arranged in communication with the interior 30 of the container 24. The condensation tray 53, may, but need not, be arranged in fluid communication with the condensation rim of the upper surface 34. As shown, the condensation tray 53 is accessible via the back surface of the housing 22 and is configured to removably couple to the housing 22 to allow a user to empty the contents of the tray 53. When connected to the housing 22, the condensation tray 53 may be suitable to form a pressure tight seal with the housing 22.

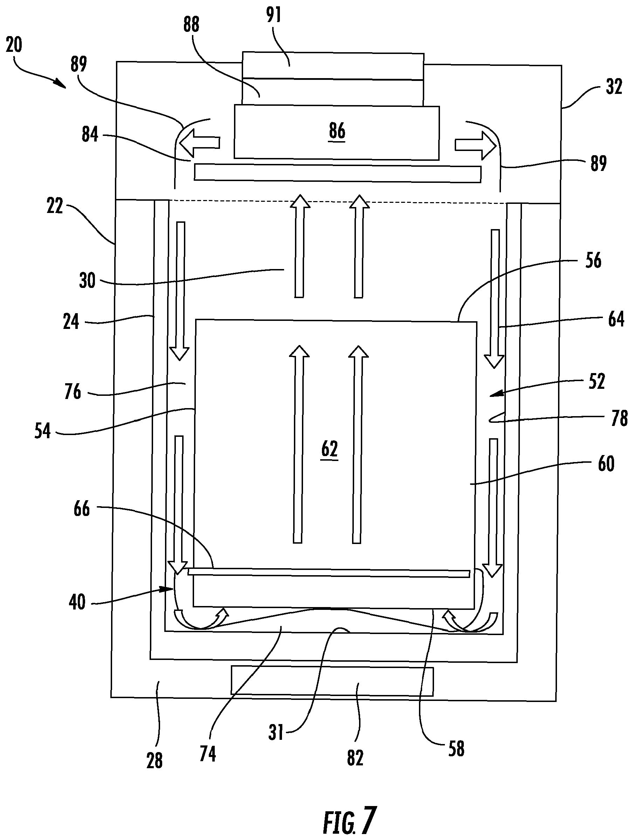

With specific reference now to FIG. 7, the cooking system 20 includes at least one first heating element 82 and at least one second heating element 84 configured to impart heat to the hollow interior and/or container 24 during various modes of operation of the cooking system 20. As shown, one or more first heating elements 82 may be disposed at the base 28 of the housing 22, generally adjacent the bottom 31 of the container 24; though, embodiments where one or more of the first heating elements 82 are arranged adjacent a side of the housing 22, in addition to or in place of the base 28 of the housing 22, are also contemplated herein. The second heating element 84 may be positioned generally at or above an upper extent of the container 24, proximate an upper opening of the container. However, in the exemplary non-limiting embodiment shown in the Figures, the second heating element 84 is disposed in the lid 32, and therefore completely outside of the container 24, above the upper extent thereof.

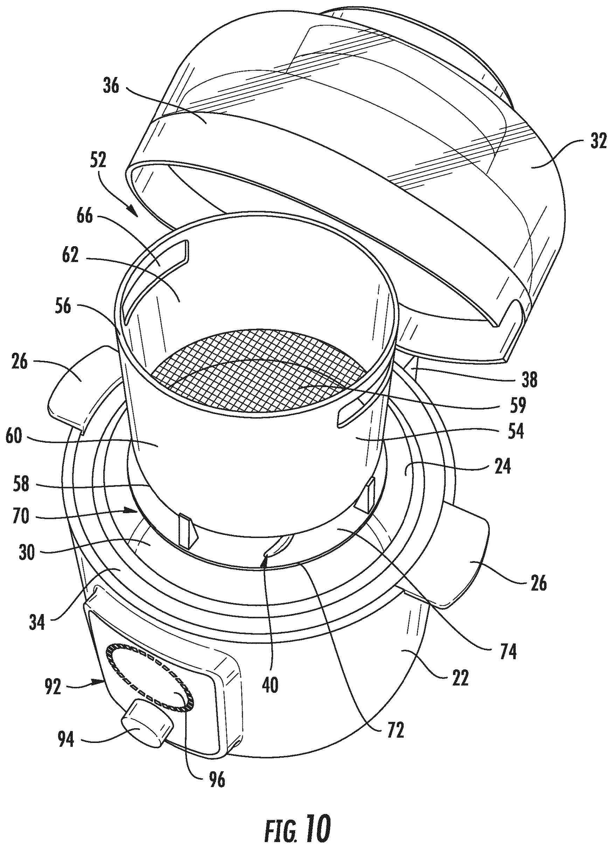

With reference again to FIGS. 1A, 4, 5, and reference to FIG. 10, a control panel or user interface 92 of the cooking system 20 is positioned adjacent one or more sides of the housing 22. The control panel 92 includes one or more inputs 94 associated with energizing the one or more heating elements 82, 84 of the cooking system 20 and for selecting various modes of operation of the cooking system 20. One or more of the inputs 94 may include a light or other indicator to show that the respective input has been selected. The control panel 92 may additionally include a display 96 separate from and associated with the at least one input 94. However, embodiments where the display 96 is integrated into the at least one input 94 are also contemplated herein.

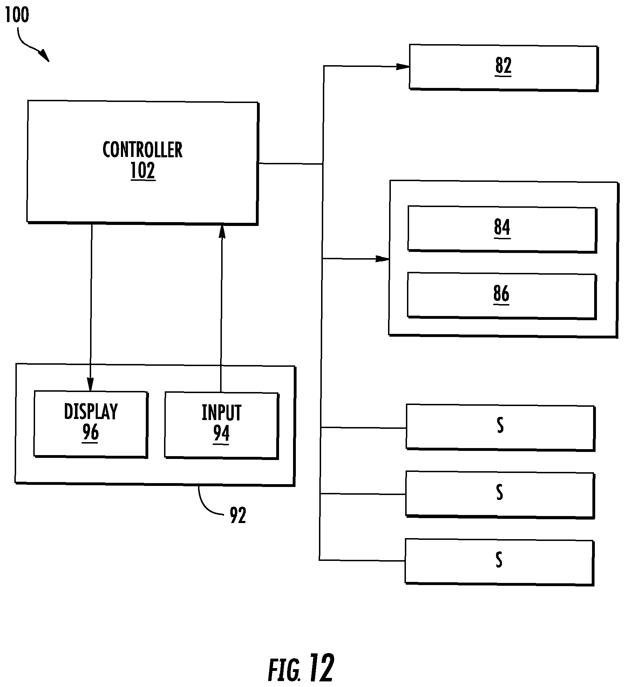

Operation of the one or more inputs 94 will be described in more detail below. As shown in FIG. 12, a control system 100 of the cooking system 20 includes a controller or processor 102 for controlling operation of the heating elements 82, 84 (and air movement device 86 including the motor 88 and fan 90 associated therewith, which will be discussed in greater detail below), and in some embodiments for executing stored sequences of heating operation. The processor 102 is operably coupled to the control panel 92 and to the heating elements 82, 84 and the air movement device 86. In addition, in an exemplary embodiment, one or more sensors S for monitoring one or more parameters (such as temperature, pressure, lid configuration, etc.) associated with operation of the heating elements 82, 84 and/or lids 32, 37 may be arranged in communication with the processor 102. In an embodiment, a first temperature sensor extends from a bottom surface 108 of the liner 23 proximate the first heating element 82 and bottom surface of the container 24, and a second temperature sensor is located within the lid 32 proximate the second heating element 84. In such embodiments, the second sensor may be used, such as to monitor temperature for example, when the lid 32 is closed and the sensor S is arranged in fluid communication with the hollow interior 30 of the system 20. The first sensor may be used to monitor temperature in this manner, separately or in conjunction with the second temperature sensor.

In an embodiment, at least one input 94 on the control panel 92 is an on/off button which allows the user to activate or deactivate the control panel 92. When the control panel 92 is deactivated, none of the heating elements 82, 84 are energized. In an exemplary embodiment, the at least one input 94 is operable to select one or more manual modes of operation of at least one of the heating elements 82, 84. Alternatively, or in addition, at least one input 94 is operable to select a stored sequence of operation of at least one heating element 82, 84. In some cases, the stored sequences may be particularly well suited for a given method of food preparation and/or for particular ingredients or types of ingredients. The plurality of stored sequences associated with the at least one input 94 may be stored within a memory accessible by the processor 102. Alternatively, the plurality of stored sequences may be stored remotely from the cooking system 20, and may be accessed by the processor 102, such as via wireless communication for example.

In addition, a user may be able to enter a time associated with operation of the cooking system 20 in a desired manual mode. The time may be entered via the same input, or a separate input as used to select a mode of operation. Further in embodiments where the system 20 is in a mode configured to perform a stored sequence in response to selection of one of the inputs 94, the display 96 may indicate a time remaining on the display. Temperature and pressure parameters may also be entered via inputs 94.

The at least one input 94 may include a distinct start button intended to initiate operation in a desired mode, a distinct stop button to cease all operation, or a stop/start button intended to initiate and cease functions. Alternatively, the cooking system 20 may be operable to automatically start operation after a predetermined time has elapsed once an input has been selected and any necessary information has been provided to the control panel. Alternatively, one or more of the other inputs 94, such as the knob for example, may be operable, such as by pushing the knob towards the control panel 92, to start and stop operation of the cooking system 20, regardless of whether the system 20 is following a stored sequence or is in a manual mode.

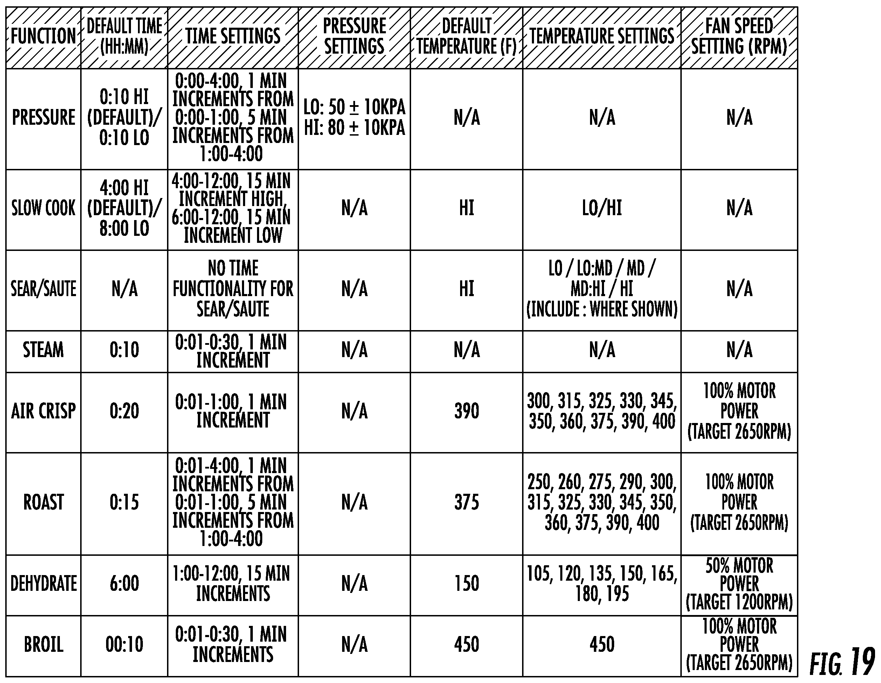

The one or more inputs 94 are operable to initiate manual operation of the cooking system 20 in at least a first cooking mode and a second cooking mode. In an embodiment, the first cooking mode employs first heating element 82 to perform conductive cooking operations. Conductive cooking operations may generally be referred to as "wet cooking" operations, such as but not limited to pressure cooking, steam cooking, slow cooking, searing, and sautéing. To create a wet cooking environment the majority of the moisture within the container, i.e. liquid added to the container 24 or moisture released from the food within the container 24, is retained within the container as the food is cooked. Although during conductive cooking operations a minimal amount of air having moisture entrained therein may be vented from the system, such air is passively removed from the cooking enclosure. Similarly, the second cooking mode employs the second heating element 84 to perform convective heating operations. Convective heating operations may generally be referred to as "dry cooking operations," which include any cooking mode that creates a "dry cooking environment" within the container 24, such as but not limited to air frying, broiling, baking/roasting and dehydrating. To create a dry cooking environment, air and moisture are actively exhausted or vented from the cooking enclosure to outside the cooking system 20, thereby maintaining a minimum level of moisture within the container 24. Parameters associated with the various exemplary but non-limiting cooking modes are shown at FIG. 19.

As is noted above, the first cooking mode of the cooking system 20 includes pressure cooking. In such embodiments, the secondary lid 37 is affixed to the container 24 or housing 22 to form a pressure-tight, sealed enclosure with the container 24. During operation in the pressure cooker mode, the controller 102 initiates operation of the first heating element 82, causing the temperature and therefore the pressure, within the enclosure formed by the container 24 and the secondary lid 37 to rise. During operation in the pressure cooker mode, the second heating element 84 disposed within the primary lid 32 is typically not energized. In an embodiment, the cooking device 20 may include a sensor S configured to monitor the pressure within the enclosure. Upon detection that the pressure is at or exceeds a predetermined threshold, the controller 102 may de-energize the heating element 82 until the pressure within the enclosure has returned to an acceptable level. Alternatively, or in addition, a pressure relief valve 51 (see FIG. 6A) may be formed in the secondary lid 37, and may open to reduce the pressure within the enclosure to below the threshold. The pressure relief valve 51 may be configured to open automatically when the pressure is above the threshold, or the valve 51 may be coupled to the controller 102 and may be operable in response to a signal generated by the controller 102, for example in response to sensing a pressure above the threshold. In embodiments where the cooking system 20 is operable in a slow cooking mode, but not a pressure cooking mode, the liner 23 of the housing 22 may be formed from a light weight, cost effective material, such as aluminum for example. However, in embodiments where the cooking system 20 is operable in a pressure cooking mode, the liner 23 should be formed from a more rigid material capable of withstanding the pressure build up within the container 24. As is noted above, the first cooking mode of the cooking system 20 also includes slow cooking, steaming, searing, and sautéing. When the cooking device 20 is operated in one of these non-pressure modes, either the secondary lid 37 may be affixed to the container 24 or housing 22 or the primary lid 32 may simply be closed.

During slow cooking, steaming, searing, and sautéing (or other conductive cooking means that do not involve "pressure cooking"), the controller 102 initiates operation of the first heating element 82, causing the temperature within the container 24 and at the bottom surface thereof to increase. Upon detection that the temperature of the chamber 30 is equal to or exceeds a predetermined threshold, the controller 102 may de-energize the heating element 82 until the temperature has returned to an acceptable level. Such de-energization or power termination to the heating elements 82 and 84 based on detection of unsafe conditions by temperature or pressure sensors S will be discussed in greater detail below.

As previously suggested, the at least one input 94 is also usable to select operation of the cooking device 20 in a second cooking mode that employs convective cooking such as air frying. In an exemplary, non-limiting embodiment, air frying in the system 20 involves the use of various components such as the fan 90, and a basket 52 and diffuser 40.

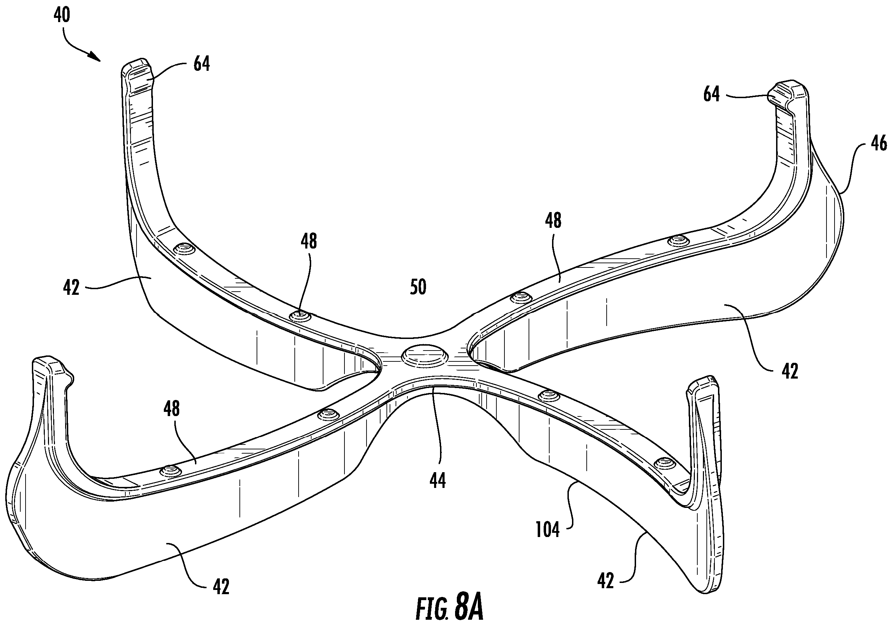

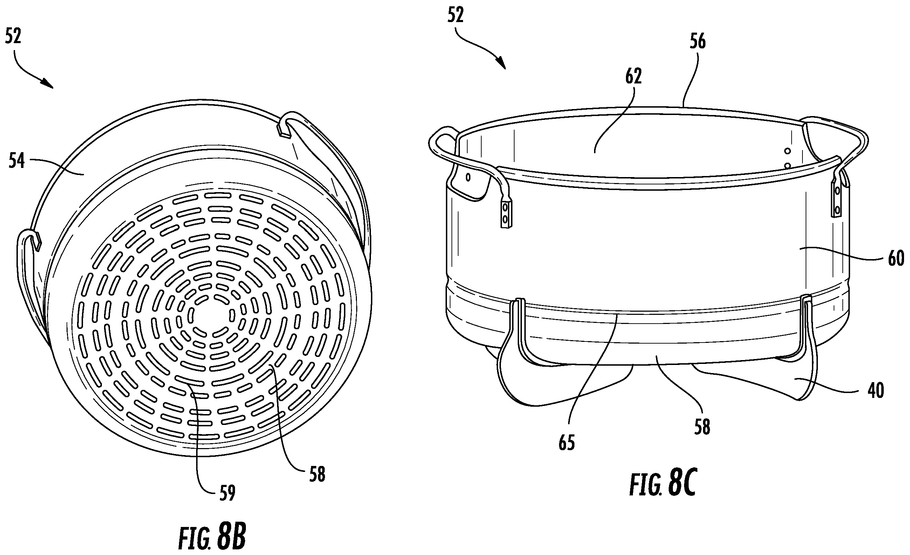

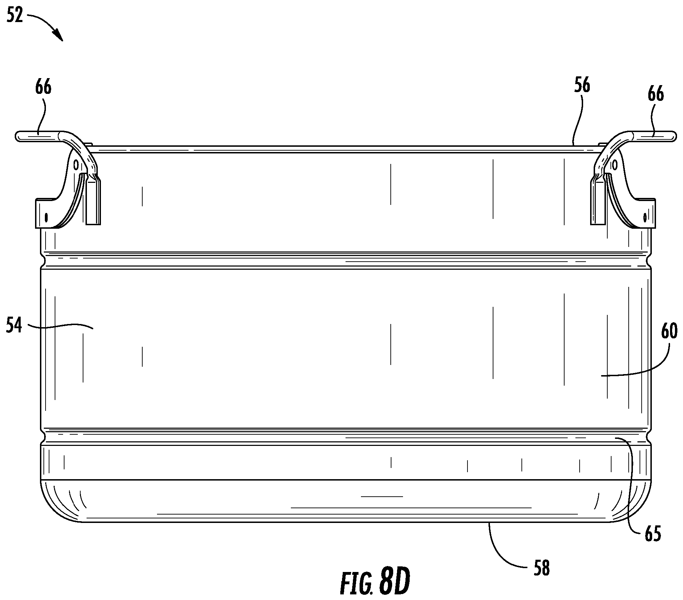

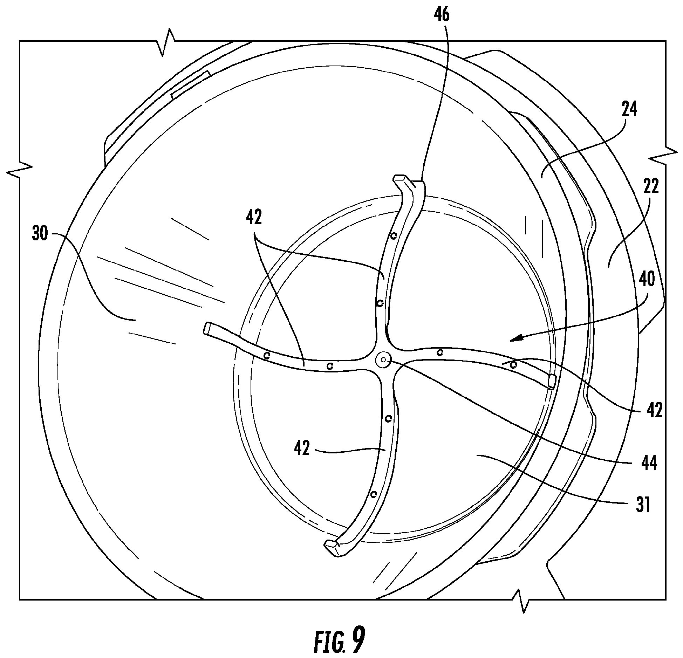

With reference now to FIGS. 8A-D and 9, an air diffuser 40 is shown. The diffuser 40 is an optional system component that may benefit air circulation during the air frying mode. The diffuser is positionable anywhere in the hollow interior 30 (though typically near the bottom). In an exemplary, non-limiting embodiment, the diffuser is positioned in contact with a bottom surface 31 of the container 24, and, as will be discussed in greater detail below, used in conjunction with an insert 52.

As shown in the Figures, the air diffuser 40 may include a plurality of vanes 42 spaced about a center body 44. Each of the plurality of vanes 42 is configured to impart swirl to an air flow circulating through the container 24. In the illustrated, non-limiting embodiment, the air diffuser 40 includes four vanes 42. However, embodiments where the air diffuser 40 includes one vane, two vanes, three vanes, or more than four vanes are also within the scope of the disclosure. Further, although the vanes 42 are illustrated as being substantially identical and equidistantly spaced about the center body 44, embodiments where a configuration of one or more of the vanes 42 varies and/or the spacing between adjacent vanes 42 varies are also contemplated herein. In an embodiment, each of the vanes 42 of the air diffuser 40 has a radius of curvature such that the vanes 42 curve generally from the center body 44 of the air diffuser outwardly. In addition, the vanes 42 of the air diffuser 40 extend generally perpendicularly in an upward direction from the bottom surface 31 of the container 24, and a lower extent of the vanes 42 generally lengthens as the vanes move out from the center body 44 towards the outer edge 46. However, an air diffuser 40 including one or more vanes having another configuration are also within the scope of the disclosure.

In an exemplary, non-limiting embodiment, the upper surface 48 and the distal ends 46 of the vanes 42 cooperate to define an area 50 within which the insert 52 may be removably mounted. With reference to FIGS. 8A-D and 9, the insert 52 includes a body 54 having a first, open end 56, second, aperture end 58, and at least one sidewall 60 extending between the first end 56 and second end 58 to define a hollow interior or chamber 62 defined by the body 54. The first end 56 is generally open to provide access for positioning one or more food items within the chamber 62. The second end 58 of the body 54 is partially closed to retain one or more food items within the chamber 62. In an exemplary, non-limiting embodiment, the closed second end 58 of the body 54 defines a plurality of apertures 59 (see FIG. 8B) to allow air, heat, and/or steam flowing within/through the interior 33 of the container 24 may pass through the apertures 59 in the end 58 to cook one or more food items within the chamber 62 of the body 54.

When the insert 52 is positioned within the area 50, in contact with the upper surface 48 of the air diffuser 40, and the insert 52 with air diffuser 40 is disposed within the interior 33 of the container 24, the bottom surface 58 of the insert 52 is positioned to be offset from the bottom surface 31 of the container 24. The offset spacing is via presence of the vanes 42 between the surfaces 58 and 31, allowing air moving through the system 20 to flow underneath the insert 52. In an embodiment, a tab 64, best shown in FIG. 8A, protrudes from the upwardly extending portion of each vane 42. As shown, the tabs 64 generally protrude inwardly, towards the center body 44 of the air diffuser 40. The tabs 64 may be sized and contoured to cooperate with a ridge or groove 65 formed in the exterior surface of the insert 52 to retain the insert 52 in position adjacent the air diffuser 40. Of course, embodiments wherein the diffuser 40 is integrally formed with either the insert 52 or bottom surface 31 and/or side surfaces of the container 24 are also contemplated.

Although the body 54 of the inserts 52 illustrated are shown having a single chamber, embodiments where the body 54 includes a plurality of chambers are also contemplated herein. As previously described, the closed second end 58 of the body 54 has a generally porous structure, which may also be formed via mesh or wire for example (see FIG. 10), so that heat and/or steam flowing through the interior 33 of the container 24 may pass through the openings in the porous structure to cook one or more food items within the chamber 62 of the body 54. One or more handles 66 may be associated with the body 54 to allow a user to easily grasp the insert 50. In the illustrated, non-limiting embodiment, the body 54 includes two handles 66 extending from the sidewall 60, or alternatively, integrally formed into the sidewall 60 of the body 54 as openings. However, any suitable configuration of the body 54 and/or handles 66 is within the scope of the disclosure. Such configurations may include removable handles.

In embodiments where the air diffuser 40 and the insert 52 may be integrally formed, as shown in FIG. 10, the insert 52 may additionally include a base 70 having an upper surface 72 and a lower surface (not shown). The base 70 may have a size and/or shape generally complementary to the body 54, and both the base 70 and body 54 may have a similar shape to the interior 33 of the container 24. In the illustrated, non-limiting embodiment, the interior 33, and the insert 52 are both generally cylindrical in shape.

The base 70 is generally offset from the second end 58 of the body 54 by a distance. As a result, a gap or clearance 74 defining a fluid flow path is formed between at least a portion of an upper surface 72 of the base 70 and the second end 58 of the body 54. In the illustrated, non-limiting embodiment, the lower surface (not shown) of the base 70 of the insert 52 has a generally planar configuration for directly contacting an adjacent supporting surface of the container 24, such as the bottom surface 31, when the insert 52 is installed therein. In embodiments where the supporting surface of the container 24 does not have a planar configuration, the configuration of the lower surface of the base 70 will be complementary to the supporting surface.

As previously described, in an embodiment, the air diffuser 40 comprising one or more vanes configured to impart swirl to air moving through the clearance 74 towards the second end 58 of the body 54 may be formed in the upper surface 72 of the base 70. In such embodiments, the configuration of the air diffuser 40 may be the same, or alternatively, different than in embodiments where the air diffuser 40 is a separate component. As shown, the vanes 42 of the air diffuser 40 integrally formed with the insert 52 have a radius of curvature such that the vanes 42 curve generally from an outer edge of the base 70 towards a center thereof. In addition, the vanes 42 of the air diffuser 40 extend generally perpendicular to the upper surface 72, and the height of the vanes 42 measured perpendicular to the upper surface 72 increases from the outer edge of the base 70 towards the center. Although the air diffuser 40 is described as being integrally formed with the insert 52, in other embodiments, all or a portion of the air diffuser may alternatively, or in addition, be integrally formed with a portion of the container 24.

Regardless of whether the insert 52 is integrally formed with or coupled to the air diffuser 40, when the insert 52 and air diffuser 40 are arranged within the interior 33 of the container 24, an annulus 76 is formed between an inner surface 78 of the container 24 and the sidewalls 60 of the body 54 (see FIG. 7). Further, in an exemplary non-limiting embodiment the height of the insert 52, when installed within the container 24 with the air diffuser 40, may be generally equal to or less than height of the container 24. In embodiments where the cooking system 20 includes a secondary lid 37, either the primary lid 32 or the secondary lid 37 may be used, i.e. coupled to the upper surface 34 of the housing 22 when the insert 52 is positioned generally within the hollow interior 30 of the system 20 or specifically within the interior 33 of the container 24.

It should be appreciated that the insert 52 may also be received directly in the hollow interior 30 as opposed to within the container 24 within the hollow interior 30. That is, the insert 52 (and diffuser 40) may be disposed in the system without the container 24, and food may be cooked in the insert 52 in accordance with of the second mode, convective cooking functions.

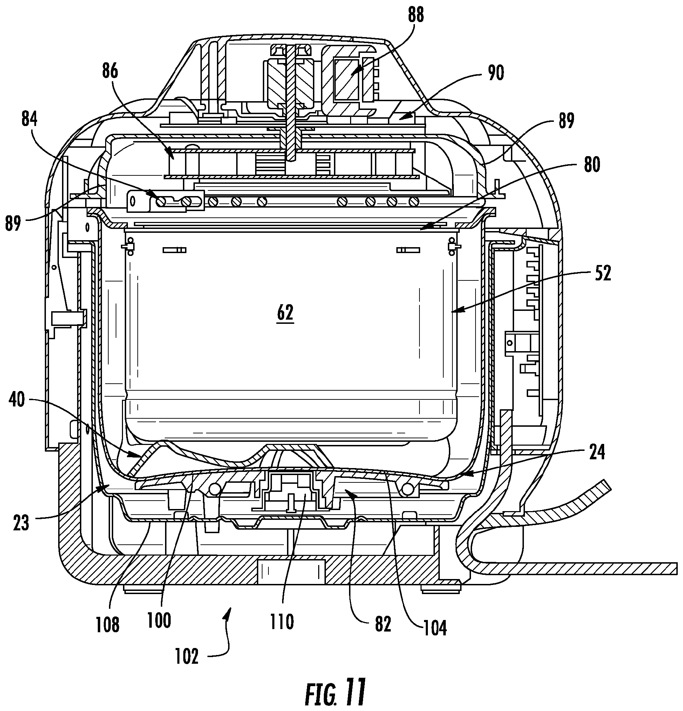

With further reference to second, convective cooking mode functions (particularly air frying modes), the second heating element 84 is configured to heat air as it passes there through via an air movement device 86, such as a fan for example. In embodiments where the insert 52 is arranged within the interior 33 of the container 24, the air movement device 86 draws air from the center of the insert 52, and moves it across the second heating element 84 before forcing the heated air through the annulus 76 between the container 24 and the insert 52 towards the clearance 74 formed between the bottom 58 of the insert and the bottom surface 31 of the container 23 (the arrows in FIG. 7 show exemplary air flow through the system). This air movement may be facilitated via air guides such as a skirt/air guide 89 that creates a non-sealing air guide for air into the annulus 76. In the illustrated, non-limiting embodiment of FIGS. 7 and 11, the air movement device 86 is driven by a motor 88 having a separate cooling mechanism 90 coupled thereto. In an embodiment, a vent 91 is formed in the primary lid for exhausting hot air generated by operation of either the air movement device 86, the motor 88, or the separate cooling mechanism 90 to the exterior of the cooking system 20. However, it should be understood that the second heating element 84 and the air movement device 86 may also be used to circulate air through the enclosure defined between the container 24 and the primary lid 32 when the insert 52 and/or air diffuser 40 are not arranged within the container 24. As is shown in the exemplary embodiments of the Figures, the at least one second heating element 84 is disposed within the primary lid 32. In an embodiment, the second heating element 84 has a diameter substantially equal to the diameter of the body 54 of the insert 52. However, embodiments where the second heating element 84 has a diameter smaller than or greater than the diameter of the body 54 of the insert 52 are also contemplated herein.

When utilizing the second heating element 84 in the air fryer mode, the controller 102 initiates operation of the second heating element 84 and the air movement device 86 to circulate the hot air represented by the arrows in FIG. 7 through the enclosure formed between the container 24 and the lid 32. During operation in the air fryer mode, the first heating element 82 is generally not energized. However, embodiments where the first heating element 82 is energized are also within the scope of the disclosure.

The air movement device 86 draws air upward through the adjacent heating element 84 and expels the hot air outwardly towards the guide 89 (which, in an exemplary embodiment, actually surrounds the fan 86). The guide 89 deflects the air downwardly towards the annulus 76 along the sides of the container 24 (again, please see the arrows in FIG. 7). The air travels down through the annulus 76 (still by actuation of the fan 86) until it is deflected off the bottom surface 31 of the container 24 and drawn up by the fan 86 into the clearance 74 up towards the diffuser 40 and end 58 of the insert 52 with the aperture pattern 59. The hot air flows over and between the plurality of vanes 42 of the air diffuser 40, which impart a rotational motion to the hot air, thereby creating a vortex as the air is drawn through the apertures 59 and into the chamber 62 of the body 54 by the air movement device 86. After traversing the chamber 62, the air is drawn back up through the heating element 84 and into the fan 86 for further circulation.

As the air circulates through the chamber 62 in the manner described above, the hot air cooks and forms a crispy outer layer on the food items disposed therein as a result of the Maillard effect. In an embodiment, a liquid, such as oil or fat, is contained within the enclosure, such as adjacent the bottom surface 31 of the container 24. The liquid may be added to the container 24 prior to operation in the air fry mode, or alternatively, may be produced as a residual material as the hot air passes over the food within the chamber 62. In embodiments where a liquid is disposed at the bottom of the container 24, as the air circulates through the interior 30 of the container 24, a portion of the liquid becomes entrained in the air flow and is heated.

As is best shown in FIG. 3C, in an exemplary embodiment the lid 32 includes a heater/fan cover 80 that protects a user from the heating element 84 and fan 86, and protects the heating element 84 and fan 86 from the areas 31,33,64 where food is cooked. The cover 80 may be included in embodiments of the cooking system 20 including only a primary lid 32, or alternatively, in embodiments including both the primary and secondary lids 32, 37. In the illustrated, non-limiting embodiment, the cover 80 is formed from a nano ceramic coated and is mounted to the primary lid 32, such as via one or more fasteners for example. In such embodiments, when the primary lid 32 is in the closed position, the cover 80 is arranged generally above the first open end of the container 24. The cover 80 has a plurality of openings 81 formed therein to allow hot air circulating within the chamber of the container 24 to pass there through.

In another convection cooking embodiment, the second cooking mode of the cooking system 20 includes a dehydrator mode, such as used to make jerky for example. In such embodiments, the primary lid 32, is typically affixed to the container 24 or housing 22, though the secondary lid 32 may also be used. When the cooking device 20 is operated in the dehydration mode, the air diffuser 40 and/or insert 52 may, but need not be, positioned within the interior 30 of the container 24. During operation in the dehydrator mode, air is configured to circulate through the container 24 in a manner similar to the air fryer mode.

In an embodiment, the air movement device 86 of the cooking system 20 is a variable speed fan operable at a plurality of rotational speeds. In an embodiment, the operational speed of the air movement device 86 may vary based on the cooking mode selected (see the exemplary, non-limiting parameters and speeds set forth in FIG. 19). For example, the speed of the air movement device 86 during operation in an air fryer mode may be different than the speed of the air movement device during operation in a dehydrator mode. The operational speed of the air movement device 86 may be controlled by the controller 102 in response to one or more inputs 94, including selection of a cooking mode. However, the controller 102 may also be configured to adjust the operational speed of the air movement device 86, or alternatively, the power supplied to the one or more heating elements 82, 84, to control the temperature and/or pressure within the hollow interior 30 of the container 24.

The first and second heating elements 82, 84 are operable independently or in combination to apply one or more predetermined power settings to cook the food products within the container 24 and/or insert 52. In operation, the heating elements 82, 84 are capable of cooking the food products independent of the loading of the food products. In other words, the heating elements 82, 84 are capable of cooking the food products independent of the amount of food products within the container 24.

In some embodiments, the cooking system 20 is operable in more than two cooking modes. For example, the cooking system 20 may be independently operable in any of a slow cooking mode, a pressure cooking mode, an air fryer mode, and a dehydrator mode. Alternatively, or in addition, the at least one input 94 may be used to select operation of the cooking device 20 in a cooking mode that functions as a combination of two or more cooking modes. In such embodiments, the controller 102 may execute a stored sequence where the first heating mechanism 82 is operated during a first portion of the sequence and the second heating mechanism 84 and air movement device 86 are operated during a second portion of the sequence. For example, in the combination mode, a food item, such as a chicken for example, may be slowly cooked or pressure cooked via operation of the first heating element 82. Then, the second heating element 84 and the air movement device 86 may be operated to air fry the chicken to achieve a crispy exterior layer. However, the embodiments described herein are intended as an example only and any sequence of operation combining both the first and second heating elements is contemplated herein. When operated in a combination of two or more cooking modes, such as a pressure cooker and an air fryer, the food need not be removed from the hollow interior 30, or more specifically the container 24, or even more specifically from the chamber 62 of the insert 52 during such a transition.

As is alluded to above, the container 24 may be usable in both the first and second cooking modes. In an exemplary embodiment, convective cooking (first mode), and more specifically air frying is possible in a container (such as container 24) that is deformable for use in a pressure cooking environment (second mode). Containers in which pressure cooking occurs may deform in response to pressure conditions within the pot during cooking. A "domed" or curved shape 100 in a bottom surface 102 (see FIG. 11) of pressure pot such as container 24 may also be employed to handle pressure conditions and the deformity that may result therefrom. Accordingly, since the container 24 may also be used as an air frying chamber, exemplary embodiments of air frying components such as the insert 52 and diffuser 40 may be configured for use in pressure cooking environments. For example, the diffuser 40 may include a curved or sloped bottom surface 104 that conforms to the domed/curved/sloped shape 100 of the bottom surface 102 of the container 24. Indeed, the bottom surface 104 of the diffuser 40 may be curved or sloped to conform to a potentially domed surface of any container (again, such as container 24) used in for wet cooking modes such as but not limited to pressure, steam, slow cooking.

In accordance with the above, the insert 52 may be placed in the container 24 with food to be cooked in the first and second modes consecutively. For example, the insert 52 may be placed in the container 24 and food may be placed within the insert for cooking in a first, conductive modes such as pressure or slow cooking. The system 20 may then be switched into the second, convective mode, and the food still contained in the insert 52 contained in the container 24 can be cooked in accordance with a convection heating function. In an exemplary embedment involving pressure cooking and air frying, such a process would involve placing food in the insert 52 and placing the insert in the container 24. The secondary lid 37 would be affixed to the system 20 and pressure cooking would/could occur. Once the pressure cooking is complete, the secondary lid 37 would be removed and replaced with a closed primary lid 32. The food may then be air fried, with all the cooking occurring within the insert 52 disposed within the container 24. Of course, while food would most commonly be cooked first in a conductive/wet mode followed by a convective/dry mode, the system 20 is certainly capable of cooking food first in a convective/dry mode followed by a conductive/wet mode.

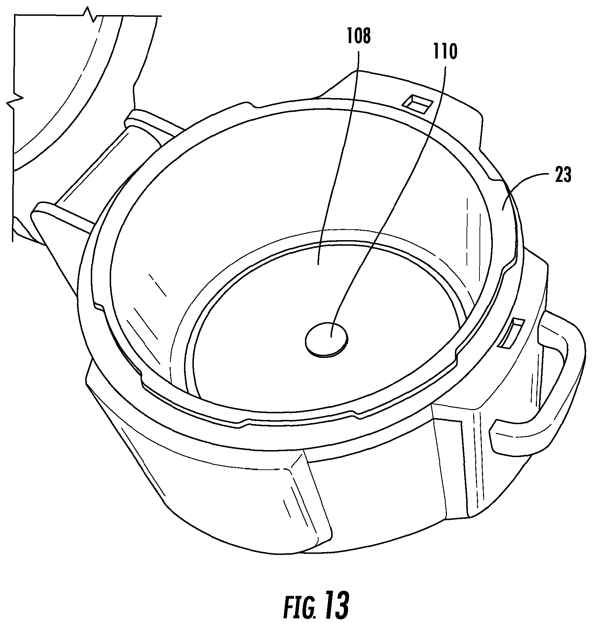

In some embodiments, it also may be useful to be able to detect presence of the container 24 in the system 20 so operation of the various cooking modes can occur effectively and safely. For example, as shown in FIG. 13 a lower surface 108 of the hollow interior 30 may support a container detection sensor 110 (such as but not limited to a depression or plunger sensor). One or more depression sensors used for container detection and disposed along the vertical extents (i.e. sides) of the liner 23, as well as one or more optical sensors anywhere in the hollow interior 30, are also contemplated.

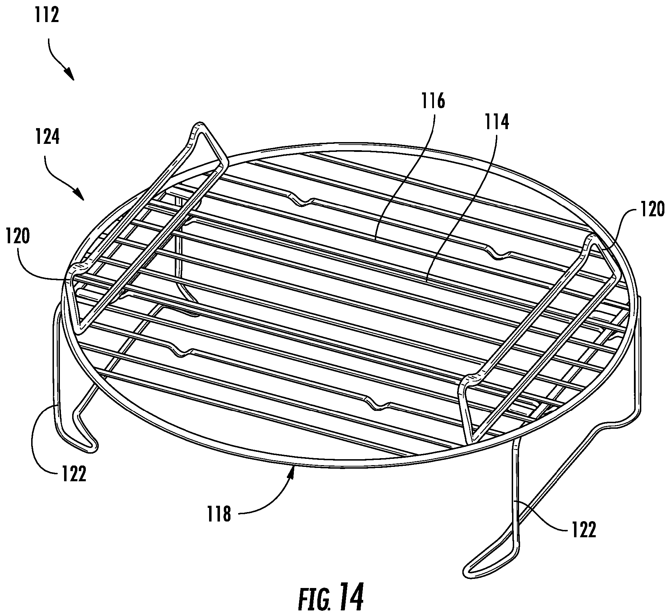

Referring now to FIGS. 14-18, a reversible insert 112 receivable in any or all of the hollow interior 30, container 24, and insert 52. In the non-limiting exemplary embodiment shown in the Figures, the insert 112 is received in the container 24. The insert includes a food supporting body or grate 114 with a first body surface 116 and an opposing second body surface 118. The insert 112 also includes first surface legs 120 and second surface legs 122.

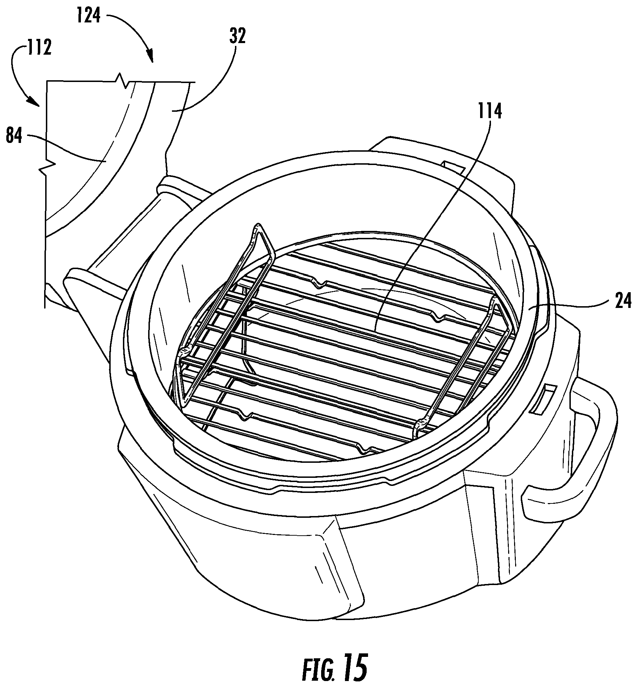

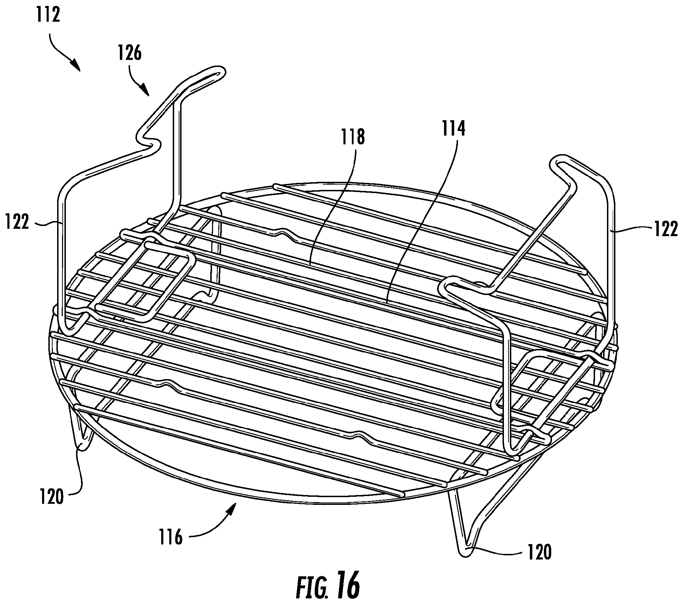

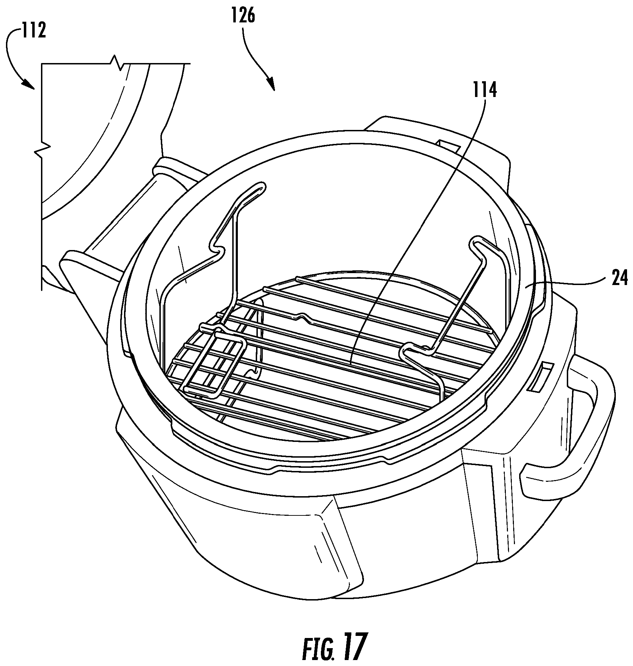

The insert 112 is reversible into two different food holding/support configurations via a 180 degree rotation. The first, greater clearance configuration 124 is best shown in FIGS. 14 and 15. The second, lesser clearance configuration 126 is best shown in FIGS. 16 and 17. As shown, the second surface legs 122 have a greater length than the first surface legs 120. This allows the grate 114 to be positioned a relatively greater distance from a surface on which the insert 112 rests in the first configuration 124 than the second configuration 126. As shown in FIG. 15, in an exemplary embodiment the insert 112 rests on the lower surface of the container 24. The first, greater clearance configuration positons the grate 114 (and any food thereon) a relatively greater distance from the first heater 82 than in the second configuration. Such positioning of the food may be beneficial in convective heating modes for a few reasons.

First, when in a broiling mode, the first configuration of the insert 112 positions the food close enough to the second heater 84 to achieve good broiling benefits. In an exemplary embodiment, in the first configuration 124 the grate 114 of the insert 112 is positionable a vertical distance from the second heating element 84 (when the lid 32 is closed) of between 1.75 and 2 inches. These distance (and distances in between and around these distances) allow for enough food space and proximity to the heat source to impart good broiling results, particularly at or around 450 degrees F. Second, when for example in the baking/roasting mode, the large clearance between the grate 114 and lower surface of the container 24 allows food to be cooked at two different levels within the container 24, which may offer various convenience and flavor benefits.

As is additionally shown, the first surface legs 120 have a lesser length than the second surface legs 122. This allows the grate 114 to be positioned a relatively lesser distance from a surface it rests on in the second configuration 126 than in the first configuration 124. As shown in FIG. 17, in an exemplary embodiment the insert 112 again rests on the lower surface of the container 24. The second, lesser clearance configuration positons the grate 114 (and any food thereon) a relatively lesser distance from the first heater 82 than in the first configuration 124. Such positioning of the food may be beneficial in conductive heating modes. For example, in the steam cooking mode, the legs 120 provide just enough clearance to position the grate 114 and food above any water and comfortably in a steam zone.

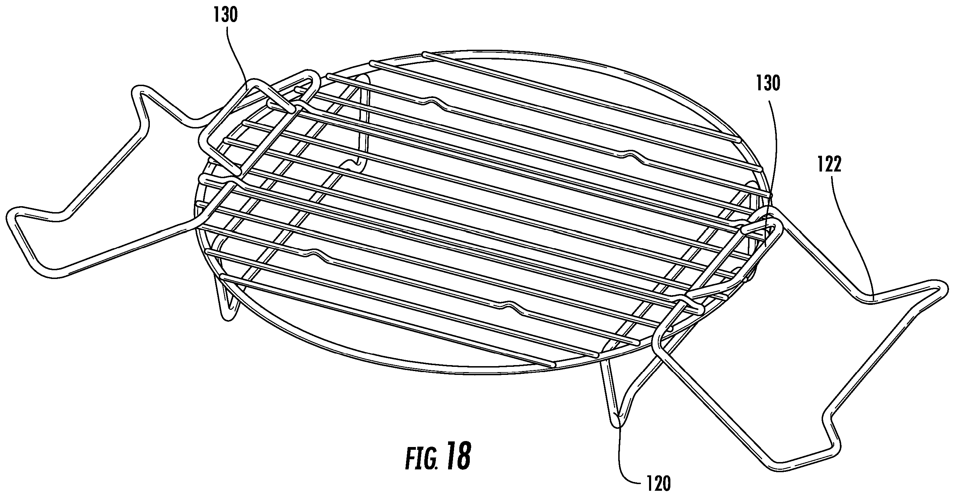

It should be noted that when in the configuration where they are not supporting the grate 114, the legs 120, 122 act as handles for the insert 112. Further, and as shown in FIG. 18, the legs 122 are rotatable from an orthogonal orientation with said food support body to a parallel orientation (the Figure actually shows the legs 122 rotated beyond parallel) with the plane of the grate 114. This allows for easier storage of the insert 112.

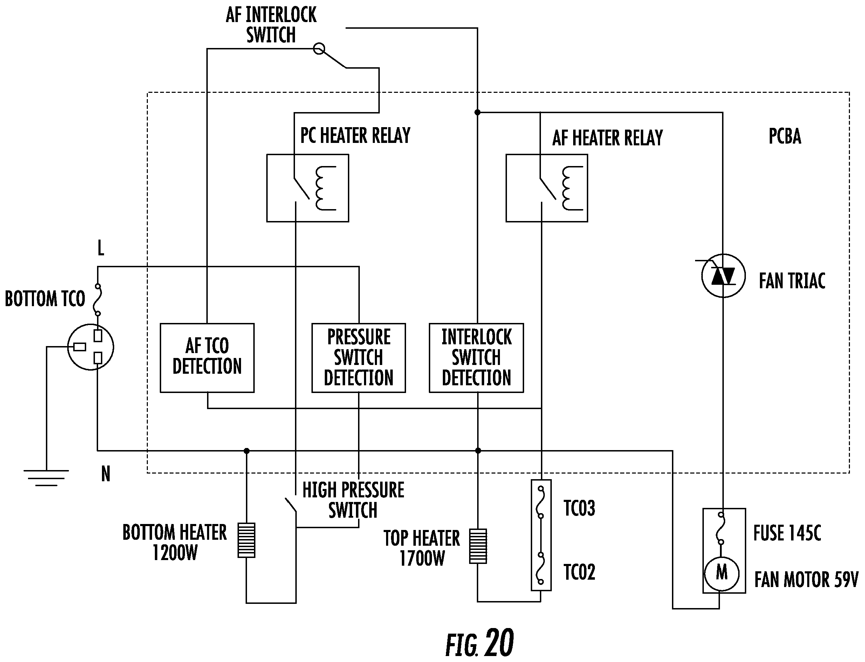

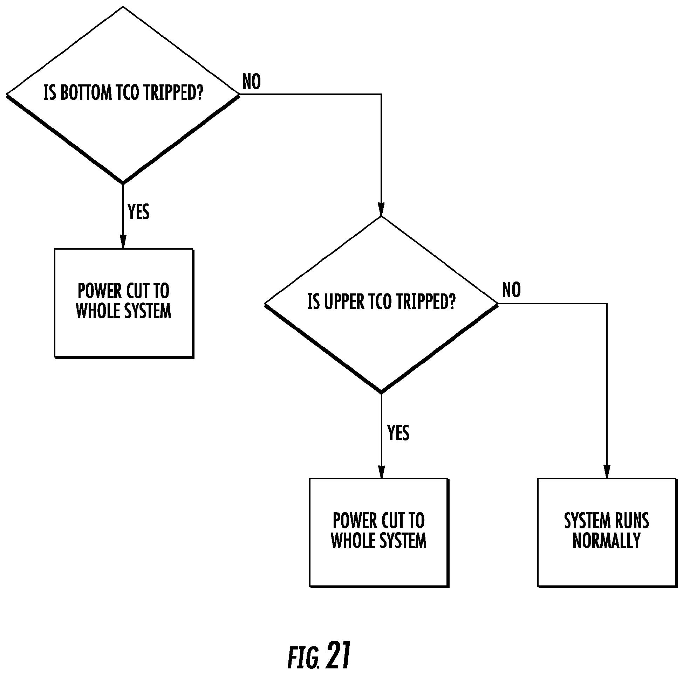

As mentioned above, and with reference again to FIG. 1A, the system 20 includes a spine 39. In an exemplary embodiment, the spine 39 houses a power/high voltage circuit board under (PCBA in the Figures) the hinge. A UI circuit board is behind the UI (not shown). Referring to FIGS. 20 and 21, the system 20 also includes a first thermal cut off (Bottom or Pressure or PC TCO/TCE) and a second thermal cut off (Upper or AF TCO/TCE). In an exemplary, non-limiting embodiment, the first thermal cut off is proximate the first heating element 82, and is triggered to terminate power thereto in response to a failure of the first heating element. Similarly, the second thermal cut off is proximate the second heating element 84, and is triggered to terminate power thereto in response to a failure of the second heating element 84. It should be noted, however, that the first thermal cut off could get hot enough to trigger a system shut down in response to overheating resulting from the second heating element 84, and the second thermal cut off could get hot enough to trigger a system shut down in response to overheating resulting from the first heating element 82.

In addition, in an exemplary embodiment, a failure in the first thermal cut off proximate the first heating element 82 will trigger the power circuit board PCBA to terminate power to the system 20 including the first heating element 82, the second heating element 84, and both the power and UI circuit boards. Similarly, a failure in the second thermal cut off proximate the second heating element 84 will trigger the power PCBA to terminate power to the system 20 including the second heating element 84, the first heating element 82, and both the power and UI circuit boards. The system 20 is thereby wired in such a way in that if any thermal cut off is triggered, power is cut to both heating elements 82, 84, rendering the system 20 inoperable. For example, if the first thermal cut off is tripped/triggered during a first mode or wet cooking function, hardware cuts power to both heating elements 82, 84, thereby prohibiting the user from using any cooking function. This circuitry, as shown in FIG. 20, creates a safer system for a user. In addition or alternatively, the controller 102 may also run software that employs a simple logic check that terminates power to both heating elements 82, 84 if either of the first or second thermal cut offs are tripped/triggered.

Failures such as but not limited to excessive temperature or excessive pressure (as detected by sensors S) may result in the tripping/triggering the first and/or second thermal cut offs discussed above. Software algorithms that correlate temperature to pressure and vice versus may also be employed by the controller 102 to detect dangerous conditions that may trip/trigger the first and/or second thermal cut offs.

With reference now to FIGS. 2, 3A, 3B, and 22A-D, a safety system employing lid detection sensors will now be discussed. A first lid detection sensor 140 is disposed proximate the hinge 38 (and is represented schematically at 140 in FIG. 3A). In an exemplary embodiment, the first sensor 140 is an actuating switch or micro switch that detects whether the primary lid 32 is open or closed. In an exemplary embodiment employing the actuating switch, a power connection to the lid heating element 84 is actually broken when the lid 32 is open. As such the lid heating element 84 (and fan 86) can only receive power to actuate convection cooking modes when the lid 32 is closed. In addition or alternatively, the controller 102 may also run software that employs a simple logic check that terminates power to the heating element 84 when the lid 32 is open.

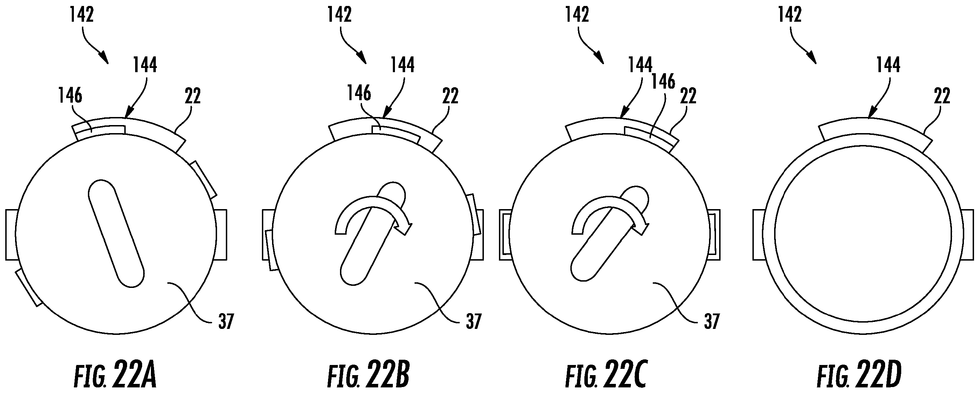

As shown in FIGS. 22A-D, a second lid detection system 142 is shown, and includes a Reed switch/sensor 144 at a relative rear of the housing 22 and a magnet 146 disposed in a corresponding section of the lid 37. As shown in the Figures, a dropped on lid 37 places the magnet 146 within range of the Reed switch 144. When the lid 37 is in this dropped on configuration (22A), the controller 102 may employ a simple logic check that detects the Reed switch's activated condition and terminates power to the whole system 20 or at least the heating elements 82, 84. When the lid 37 is partially engaged on the housing (up to 85% rotation onto a housing bayonet in the exemplary embodiment shown in FIG. 22B), the controller 102 may again employ a simple logic check that detects the Reed switch's activated condition and terminates power to the whole system 20 or at least the heating elements 82, 84. When the lid 37 is fully engaged on the housing 22 (greater than 85% rotated onto a housing bayonet in the exemplary embodiment shown in FIG. 22C), the controller 102 may employ a simple logic check that detects the Reed switch's deactivated condition and allow power to flow normally to the system 20. Similarly, when the lid 37 is not present at all, the controller 102 may employ a simple logic check that detects the Reed switch's deactivated condition and allow power to flow normally to the system 20. However, the controller 102 may also and again employ a simple logic check that detects a closed condition of the first lid 32, and prevent power from flowing to the first heating element 82.

Indeed, when a closed condition of the first lid 32 is detected using the above referenced sensor 140, the controller 102 may deactivate at least the pressure cooking input 94 on the display 92, and in an exemplary embodiment all inputs 94 for the conduction/wet cooking functions including the pressure cooking input 94, slow cooking input 94, steam input 94, and sear/sauté input 94. Similarly, when a closed condition of the second lid 37 (FIG. 22C) is detected using the Reed switch 144, the controller 102 may deactivate all inputs 94 for the convective/dry cooking functions including the air fry/crisp mode input 94, bake/roast input 94, broil input 94, and dehydrate input 94. In both cases, deactivation of the inputs 94 may include non-function of the inputs 94 and a termination of back lighting to the inputs 94.

The cooking system 20 illustrated and described herein provides an enhanced user experience by combining the functionality of several conventional household products into a single user-friendly device.

All references, including publications, patent applications, and patents cited herein are hereby incorporated by reference to the same extent as if each reference were individually and specifically indicated to be incorporated by reference and were set forth in its entirety herein.

The use of the terms "a" and "an" and "the" and similar referents in the context of describing the disclosure (especially in the context of the following claims) is to be construed to cover both the singular and the plural, unless otherwise indicated herein or clearly contradicted by context. The terms "comprising," "having," "including," and "containing" are to be construed as open-ended terms (i.e., meaning "including, but not limited to,") unless otherwise noted. Recitation of ranges of values herein are merely intended to serve as a shorthand method of referring individually to each separate value falling within the range, unless otherwise indicated herein, and each separate value is incorporated into the specification as if it were individually recited herein. All methods described herein can be performed in any suitable order unless otherwise indicated herein or otherwise clearly contradicted by context. The use of any and all examples, or exemplary language (e.g., "such as") provided herein, is intended merely to better illuminate the disclosure and does not pose a limitation on the scope of the disclosure unless otherwise claimed. No language in the specification should be construed as indicating any non-claimed element as essential to the practice of the disclosure.

Exemplary embodiments of this disclosure are described herein, including the best mode known to the inventors for carrying out the disclosure. Variations of those embodiments may become apparent to those of ordinary skill in the art upon reading the foregoing description. The inventors expect skilled artisans to employ such variations as appropriate, and the inventors intend for the disclosure to be practiced otherwise than as specifically described herein. Any combination of the above-described elements in all possible variations thereof within the scope of the claims is encompassed by the disclosure unless otherwise indicated herein or otherwise clearly contradicted by context.

As part of this detailed description, the following examples are set out. The examples illustrate subject-matter disclosed in the present application and may describe various implementations and combinations of features. The examples should not be interpreted as necessarily defining embodiments covered by the claims. The scope of the invention for which protection is sought is defined solely by the claims.

### First Example

A cooking system for cooking food having a housing having a hollow interior; a lid movable relative to the housing; and at least one heating element associated with one of the housing and the lid, wherein the cooking system is operable in a plurality of modes including a conductive cooking mode and a convective cooking mode. In the conductive cooking mode the cooking system is operable as a conductive cooker and in the convective cooking mode the cooking system is operable as a convection cooker.

Optionally, when in the conductive cooking mode the cooking system is operable as at least one of a pressure cooker, steam cooker, slow cooker, searing surface, and sautéing surface, and when in the convective cooking mode the cooking system is operable as at least one of an air fryer, baking/roasting oven, broiler, and dehydrator.

Optionally, a food container is receivable in the hollow interior, and food is receivable in the food container in both the conductive cooking mode and the convective cooking mode.

Optionally, the food container includes a container surface, and food is receivable in the food container in contact with the container surface in both the conductive cooking mode and the convective mode.

Optionally, the at least one heating element is a first heating element disposed at or below a lower extent of the container surface, and a second heating element disposed at or above an opening at an upper extent of the food container.

Optionally, the second heating element is disposed the lid.

Optionally, a fan is disposed with the second heating element at or above an opening at an upper extent of the food container.

Optionally, at least one support foot extends from the housing.

Optionally, the at least one foot is a first foot and a second foot disposed at opposite sides of the housing.

Optionally, the first foot is larger in at least one dimension than the second foot.

Optionally, a first temperature sensor is arranged proximate the first heating element and a second heating sensor is arranged in the lid.

Optionally, a second lid is movable relative to the housing to selectively seal the hollow interior.

Optionally, the lid is movable between an open position and a closed position, and the second lid is receivable with the lid when the lid is in the open position.

Optionally, the second lid is coupled to the housing when the cooking system is in the conductive cooking mode.

Optionally, the second lid is detachable from the housing.

Optionally, an insert is provided for supporting the food item in the convective cooking mode.

Optionally, an insert is provided for supporting the food item in the convective cooking mode and the conductive cooking mode.

Optionally, an insert is provided for supporting the food item, the insert being receivable within the container in the convective cooking mode.

Optionally, an insert is provided for supporting the food item, the insert being receivable within the food container in the convective cooking mode and the conductive cooking mode.

Optionally, the insert includes body with a base at one end and an open end at an opposing end, and when the insert is received in the food container, an annulus is formed between an inner wall of the food container and an outer wall of the body.

Optionally, the base includes a plurality of apertures that allow fluid to flow through the base.

Optionally, a diffuser is disposed adjacent the base, the diffuser including at least one vane configured to impart swirl to a fluid circulating through the aperture pattern during the convective cooking mode.

Optionally, a fan is disposed with a second heating element at or above an opening at an upper extent of the food container, the fan being positioned and configured to move heated air relatively downward through the annulus, relatively horizontally across a lower surface of the food container, and relatively upward through the diffuser and aperture pattern of the base.

Optionally, the air circulating through the insert forms a vortex.

Optionally, the food container includes an upward facing lower surface that is curved upward in a direction of an upper opening of the container, and the diffuser includes downward facing lower surface that is curved or sloped to conform to the upward facing lower surface of the food container.

Optionally, the fan is positioned and configured to draw air relatively upward through the insert and through the second heating element in the convective cooking mode.

Optionally, the cooking device is transformable between the conductive cooking mode and the convective cooking mode without removing the food item from the hollow interior.

Optionally, the lid is attached to said housing via a hinged connection.

Optionally, the lid is attached to the housing via a detachable connection.

Optionally, the lid is attached to the housing via a detachable hinged connection.

### Second Example

A cooking system for cooking food which is functional in a plurality of cooking modes, having a housing having a hollow interior; a lid movable relative to the housing; at least one heating element disposed within one of the housing and the lid; and a rotational air movement device coupled to at least one of the housing and the lid, wherein during operation of the rotational air movement device, the rotational air movement device is operable to rotate at a plurality of speeds including first rotational speed and a second rotational speed, the second rotational speed being different than the first rotational speed.

Optionally, the first rotational speed is faster than the second rotational speed.

Optionally, the first rotational speed or the second rotation speed of the rotational air movement device is selected in response to a selected cooking mode of the plurality of cooking modes.

Optionally, the plurality of cooking modes includes a first cooking mode and a second cooking mode and the rotational air movement device moves air through the hollow interior at a first speed in the first cooking mode and moves air through the hollow interior at a second speed in the second cooking mode.

Optionally, in the first cooking mode, the cooking system is operable as at least one of an air fryer mode, a roasting/baking mode, and a broiling mode, and the rotational air movement device moves air at the first rotational speed.

Optionally, in the second cooking mode, the cooking system is operable as a dehydrator, and the rotational air movement device moves air at the second rotational speed.

Optionally, the second rotational speed is half as fast as the first rotational speed.

Optionally, the rotational air movement device rotates at 2650 RPM at the first rotational speed and 1200 RPM at the second rotational speed.

Optionally, when at the second rotational speed the rotational air movement device operates at 50% power relative to operation at the first rotational speed.

Optionally, the plurality of cooking modes includes a third cooking mode and the rotational air movement device does not rotate or move air during the third cooking mode.

Optionally, in the third cooking mode, the cooking system is operable as at least one of a pressure cooker, slow cooker, steamer, searing surface, and sautéing surface.

Optionally, the rotational air movement device is arranged within the lid.

Optionally, the at least one heating element is arranged within the lid.

### Example 3

A cooking system for cooking food has a housing having a hollow interior; a lid movable between an open position and a closed position relative to the housing to selectively close an opening to the hollow interior, wherein in both the open position and the closed position, the lid is affixed to the housing; and at least one heating element disposed within one of the housing and the lid; wherein the cooking system is operable in a plurality of modes including a first mode and a second mode, during operation of the cooking system in the first mode, the lid is arranged in the closed position, and during operation of the cooking system in the second mode, the lid is arranged in the open position.

Optionally, in the first mode, the cooking system is operable as a convection cooker.

Optionally, in the first mode, the cooking system is operable as at least one of an air fryer, baking/roasting oven, broiler, and dehydrator.

Optionally, in the second mode, the cooking system is operable as a conduction cooker.

Optionally, in the second mode, the cooking system is operable as at least one of a pressure cooker, slow cooker, steamer, searing surface, and sautéing surface.

Optionally, a secondary lid is connectable to the housing to seal the hollow interior.

Optionally, the secondary lid forms a pressure tight seal with the housing.

Optionally, the lid is movable between the open position and the closed position when the secondary lid is affixed to the housing.

Optionally, the lid is in the open position when the secondary lid is affixed to the housing.

### Example 4

A cooking system for cooking a food item has a housing having a hollow interior; a primary lid connectable to the housing, wherein when the primary lid is connected to the housing, the primary lid is arranged in contact with the housing; a secondary lid connectable to the housing, wherein when the secondary lid is connected to the housing, the secondary lid is arranged in contact with the housing, wherein the primary lid and the secondary lid are connectable to the housing simultaneously; and wherein at least one heating element disposed within at least one of the housing, the primary lid, and the secondary lid.

Optionally, the primary lid and the secondary lid are connectable to an upper surface of the housing simultaneously.

Optionally, the secondary lid is nested within the primary lid when both the primary lid and the secondary lid are in contact with the housing.

Optionally, the primary lid is connected to the housing in both an open position and a closed position.

Optionally, the primary lid is arranged in the open position when the secondary lid is in contact with the upper surface of the housing.

### Example 5

A cooking system for cooking food is functional in a plurality of cooking modes and has a housing having a hollow interior; a lid movable relative to the housing; at least one heating element disposed within one of the housing and the lid; an air movement device coupled to at least one of the housing and the lid to circulate air through the hollow interior; and an air diffuser configured to impart rotation to the air circulating through the hollow interior, wherein the air diffuser is arranged within the hollow interior during at least one of the plurality of cooking modes.

Optionally, the air diffuser has a center body; and a plurality of vanes extending radially outwardly from the center body.

Optionally, the plurality of vanes includes four vanes.

Optionally, each of the plurality of vanes is equidistantly spaced about the center body.

Optionally, at least one of the plurality of vanes has a radius of curvature such that the at least one of the plurality of vanes curves generally outwardly from the center body.

Optionally, a height of at least one of the plurality of vanes, measured perpendicular to a bottom surface of the housing, increases from the center body towards a distal edge of the at least one of the plurality of vanes.

Optionally, an upper surface of the center body is coplanar with an upper surface of the plurality of vanes.

Optionally, an insert is positionable within the hollow interior of the housing in vertical alignment with the air diffuser, the insert having a first end, a second end, and at least one sidewall extending between the first end and the second end to define an interior chamber.

Optionally, the second end of the insert has a porous structure such that air flows through the insert.

Optionally, the insert is removably mounted to the air diffuser.

Optionally, the insert has at least one groove formed therein and the plurality of vanes include a tab receivable within the at least one groove to restrict movement of the insert relative to the air diffuser.

Optionally, the insert is integrally formed with the air diffuser.

Optionally, an annulus is formed between a wall of the housing and the at least one sidewall, the annulus being arranged in fluid communication with the second end of the insert.

### Example 6

An insert for disposal on a surface of a cooking system has a food support body including a first body surface and an opposing second body surface; at least one leg extending from the first body surface; and at least one leg extending from the second body surface, wherein the at least one leg extending from the first body surface extends a lesser distance from the food support body than the at least one leg extending from the second body surface extends from the food support body.

Optionally, the food support body is rotatable between a greater clearance position and a lesser clearance position, wherein in the greater clearance position the food support body is supported by the at least one leg extending from the second body surface so as to have a greater distance from the surface of the cooking system, and in the lesser clearance position the food support body is supported by the at least one leg extending from the first body surface so as to have a lesser distance from the surface of the cooking system.

Optionally, the food support body is a cooking grate.

Optionally, the at least one leg from the second body surface is two legs at opposing ends of the food support body, the two legs being rotatable from an orthogonal orientation with the food support body into a parallel orientation with the food support body.

### Example 7

A cooking system for cooking food is functional in a plurality of cooking modes and has a housing having a hollow interior; a first heating element; a second heating element distinct from the first heating element; a first thermal cut off in communication with the first heating element; and a second thermal cut off in communication with the second heating element, wherein a triggering of the first thermal cut off terminates power to both the first heating element and the second heating element, and a triggering of the second thermal cut off terminates power to both the first heating element and the second heating element.

Optionally, the triggering of the first thermal cut off is a failure in the first heating element, and the triggering of the second thermal cut off is a failure in the second heating element.

Optionally, the first heating element is disposed in proximate a bottom of the hollow interior and the second heating element is in a lid of the cooking system.

### Example 8

A cooking system for cooking food is functional in a plurality of cooking modes and has a housing having a hollow interior; a first lid for use in at least a first cooking mode; a second lid for use in at least a second cooking mode; a first lid detection sensor configured to detect a closed condition between the first lid and the housing; and a second lid detection sensor configured to detect a closed condition between the second lid and the housing.

Optionally, the first cooking mode is a convection cooking mode and the second cooking mode is a conduction cooking mode.

Optionally, the first lid is connected to the housing at a hinge, and the first sensor is an actuating switch proximate the hinge.

Optionally, the second sensor is a senor system including a Reed switch in the housing and a magnet in the second lid.

Optionally, the system will not function in the convection cooking mode when the first lid is not detected as closed.

Optionally, the system will not function in the conduction cooking mode when the second lid is not detected as closed.

Optionally, the conduction cooking mode includes a pressure cooking mode, and the system will not function in the pressure cooking mode when the second lid is not detected as closed.

Optionally, the system will not function in the pressure cooking mode when the first lid is detected as closed.

## Claims

1. A cooking system (20) for cooking food, the cooking system (20) comprising:
a housing (22) having a hollow interior (30);
a first lid (32) movable between an open position and a closed position relative to said housing (22) to selectively close an opening to said hollow interior (30), wherein in both said open position and said closed position, said first lid (32) is affixed to said housing (22) by a hinge (38);
a first heating element (82) disposed within said housing (22); and
a second heating element (84) disposed within said first lid (32);
wherein the cooking system (20) is operable in a plurality of modes including a first mode and a second mode, wherein, during operation of the cooking system (20) in said second mode, the second heating element (84) is employed to perform convective cooking operations, and the first lid (32) is arranged in said closed position; and
during operation of the cooking system (20) in said first mode, the first heating element (82) is employed to perform conductive cooking operations;
**characterized in that** the cooking system (20) further comprises a first lid detection sensor (140) configured to detect a closed condition between the first lid and the housing;
and **in that**
in said conductive cooking mode the cooking system is operable as at least a pressure cooker.

2. The cooking system (20) of claim 1, wherein in said second mode, said cooking system (20) is operable as at least one of an air fryer, baking/roasting oven, broiler, and dehydrator.

3. The cooking system (20) of claim 1 or 2, wherein in said first mode, said cooking system (20) is operable as at least one of a slow cooker, steamer, searing surface, and sautéing surface.

4. The cooking system (20) of any preceding claim, further comprising a secondary lid (37) connectable to said housing (22) to seal said hollow interior (30).

5. The cooking system (20) of claim 4, wherein said secondary lid (37) forms a pressure tight seal with said housing (22).

6. The cooking system (20) of claim 4 or 5, wherein said first lid (32) is movable between said open position and said closed position when said secondary lid (37) is affixed to said housing (22).

7. The cooking system (20) of any of claims 4 to 6, wherein said first lid (32) is in said open position when said secondary lid (37) is affixed to said housing (22).

8. The cooking system (20) of any preceding claim, wherein the cooking system (20) is operable in the first mode with the first lid (32) in said closed position.

9. The cooking system (20) of any preceding claim, wherein the cooking system (20) is operable in the first mode with the first lid (32) in said closed position to perform at least one of slow cooking, steaming, searing, and sautéing.

10. The cooking system (20) of any preceding claim, further comprising an air movement device (86), wherein the second heating element (84) is configured to heat air as it passes through the air movement device (86).

11. The cooking system (20) of claim 10, wherein the air movement device (86) is a variable speed fan operable at a plurality of rotational speeds, and the speed of the air movement device (86) is arranged to vary based on the cooking operation selected.

12. The cooking system (20) of any preceding claim, comprising said controller (102), wherein the controller (102) is arranged to employ a logic check to detect a closed condition of the first lid (32) and prevent power from flowing to the first heating element (82).

13. The cooking system (20) of any of claims 4 to 7, further comprising a second lid detection system (142), said second lid detection system (142) including a reed switch or sensor (144) at a rear of the housing (22) and a magnet (146) in a corresponding section of the second lid (37).

14. The cooking system (20) of claim 13, comprising said controller (102); wherein,
when the second lid (37) is in a first condition, the controller (102) is arranged to employ a logic check to detect an activated condition of the reed switch or sensor (144) and
terminate power to at least the first and second heating elements (82, 84);
the first condition being at least one of
(i) when the second lid (37) is in a dropped on configuration or
(ii) when the second lid (37) is partially engaged on the housing (22).

15. The cooking system (20) of claim 13 or claim 14, comprising said controller (102), and further comprising a display (92) for receiving inputs (94) for said cooking operations; wherein, when a closed condition of the second lid (37) is detected using the reed switch or sensor (144), the controller (102) is arranged to deactivate all inputs (94) for said convective cooking operations.

## Patentansprüche

1. Garsystem (20) zum Garen von Lebensmitteln, wobei das Garsystem (20) Folgendes umfasst:
ein Gehäuse (22) mit einem hohlen Innenraum (30);
einen ersten Deckel (32), der zwischen einer geöffneten Stellung und einer geschlossenen Stellung relativ zu dem Gehäuse (22) beweglich ist, um selektiv eine Öffnung zu dem hohlen Innenraum (30) zu schließen, wobei der erste Deckel (32) sowohl in der geöffneten Stellung als auch in der geschlossenen Stellung durch ein Scharnier (38) an dem Gehäuse (22) befestigt ist;
ein erstes Heizelement (82), das innerhalb des Gehäuses (22) angeordnet ist; und
ein zweites Heizelement (84), das innerhalb des ersten Deckels (32) angeordnet ist;
wobei das Garsystem (20) in mehreren Modi betreibbar ist, einschließlich eines ersten Modus und eines zweiten Modus, wobei während des Betriebs des Garsystems (20) in dem zweiten Modus das zweite Heizelement (84) verwendet wird, um konvektive Garvorgänge durchzuführen, und sich der erste Deckel (32) in der geschlossenen Stellung befindet; und
während des Betriebs des Garsystems (20) in dem ersten Modus das erste Heizelement (82) verwendet wird, um Wärmeleitungsgarvorgänge durchzuführen;
**dadurch gekennzeichnet, dass** das Garsystem (20) ferner einen ersten Deckelerfassungssensor (140) umfasst, der dazu ausgelegt ist, einen geschlossenen Zustand zwischen dem ersten Deckel und dem Gehäuse zu detektieren;
und dass in diesem Wärmeleitungsgarmodus das Garsystem zumindest als Druckkocher betreibbar ist.

2. Garsystem (20) nach Anspruch 1, wobei in dem zweiten Modus das Garsystem (20) als mindestens eines der folgenden Geräte betreibbar ist: Heißluftfritteuse, Back-/Bratofen, Grill und Dörrgerät.

3. Garsystem (20) nach Anspruch 1 oder 2, wobei das Garsystem (20) in dem ersten Modus als mindestens eines des Folgenden betreibbar ist: Schongarer, Dampfgarer, Anbratfläche und Sautierfläche.

4. Garsystem (20) nach einem der vorhergehenden Ansprüche, ferner umfassend einen sekundären Deckel (37), der mit dem Gehäuse (22) verbindbar ist, um den hohlen Innenraum (30) abzudichten.

5. Garsystem (20) nach Anspruch 4, wobei der sekundäre Deckel (37) mit dem Gehäuse (22) eine druckdichte Abdichtung bildet.

6. Garsystem (20) nach Anspruch 4 oder 5, wobei der erste Deckel (32) zwischen der geöffneten Stellung und der geschlossenen Stellung beweglich ist, wenn der sekundäre Deckel (37) an dem Gehäuse (22) befestigt ist.

7. Garsystem (20) nach einem der Ansprüche 4 bis 6, wobei sich der erste Deckel (32) in der geöffneten Stellung befindet, wenn der sekundäre Deckel (37) an dem Gehäuse (22) befestigt ist.

8. Garsystem (20) nach einem der vorhergehenden Ansprüche, wobei das Garsystem (20) in dem ersten Modus mit dem ersten Deckel (32) in der geschlossenen Stellung betreibbar ist.

9. Garsystem (20) nach einem der vorhergehenden Ansprüche, wobei das Garsystem (20) in dem ersten Modus mit dem ersten Deckel (32) in der geschlossenen Stellung betreibbar ist, um mindestens eines von Schongaren, Dampfgaren, Anbraten und Sautieren durchzuführen.

10. Garsystem (20) nach einem der vorhergehenden Ansprüche, ferner umfassend eine Luftbewegungsvorrichtung (86), wobei das zweite Heizelement (84) dazu ausgelegt ist, Luft zu erwärmen, während sie durch die Luftbewegungsvorrichtung (86) strömt.

11. Garsystem (20) nach Anspruch 10, wobei die Luftbewegungsvorrichtung (86) ein Lüfter mit variabler Drehzahl ist, der mit mehreren Drehzahlen betreibbar ist, und die Drehzahl der Luftbewegungsvorrichtung (86) in Abhängigkeit von dem ausgewählten Garvorgang variiert.

12. Garsystem (20) nach einem der vorhergehenden Ansprüche, umfassend die Steuervorrichtung (102), wobei die Steuervorrichtung (102) dazu ausgelegt ist, eine Logikprüfung einzusetzen, um einen geschlossenen Zustand des ersten Deckels (32) zu erfassen und zu verhindern, dass Strom zu dem ersten Heizelement (82) fließt.

13. Garsystem (20) nach einem der Ansprüche 4 bis 7, ferner umfassend ein zweites Deckelerfassungssystem (142), wobei das zweite Deckelerfassungssystem (142) einen Reedschalter oder -sensor (144) an einer Rückseite des Gehäuses (22) und einen Magneten (146) in einem entsprechenden Abschnitt des zweiten Deckels (37) beinhaltet.

14. Garsystem (20) nach Anspruch 13, umfassend die Steuervorrichtung (102); wobei, wenn sich der zweite Deckel (37) in einem ersten Zustand befindet, die Steuervorrichtung (102) dazu ausgelegt ist, eine Logikprüfung einzusetzen, um einen aktivierten Zustand des Reedschalters oder -sensors (144) zu erfassen und die Stromzufuhr zumindest zu dem ersten und dem zweiten Heizelement (82, 84) zu unterbrechen;
wobei der erste Zustand mindestens eines der Folgenden ist:
(i) wenn sich der zweite Deckel (37) in einer lose aufgelegten Konfiguration befindet oder
(ii) wenn der zweite Deckel (37) teilweise mit dem Gehäuse (22) in Eingriff steht.

15. Garsystem (20) nach Anspruch 13 oder Anspruch 14, umfassend die Steuervorrichtung (102) und ferner umfassend eine Anzeige (92) zum Empfangen von Eingaben (94) für die Garvorgänge; wobei, wenn ein geschlossener Zustand des zweiten Deckels (37) unter Verwendung des Reedschalters oder -sensors (144) erfasst wird, die Steuervorrichtung (102) dazu ausgelegt ist, alle Eingaben (94) für die konvektiven Garvorgänge zu deaktivieren.

## Revendications

1. Système de cuisson (20) pour cuire des aliments, le système de cuisson (20) comprenant :
un boîtier (22) ayant un intérieur creux (30) ;
un premier couvercle (32) mobile entre une position ouverte et une position fermée relativement audit boîtier (22) pour fermer sélectivement une ouverture donnant sur ledit intérieur creux (30), dans lequel à la fois dans ladite position ouverte et dans ladite position fermée, ledit premier couvercle (32) est apposé sur ledit boîtier (22) par une charnière (38) ;
un premier élément chauffant (82) disposé à l'intérieur dudit boîtier (22) ; et
un second élément chauffant (84) disposé à l'intérieur dudit premier couvercle (32) ;
dans lequel le système de cuisson (20) peut être mis en opération dans une pluralité de modes y compris un premier mode et un second mode, dans lequel, durant la mise en opération du système de cuisson (20) dans ledit second mode, le second élément chauffant (84) est employé pour réaliser des opérations de cuisson par convection,
et le premier couvercle (32) est agencé dans ladite position fermée ; et
durant la mise en opération du système de cuisson (20) dans ledit premier mode, le premier élément chauffant (82) est employé pour réaliser des opérations de cuisson par conduction ;
**caractérisé en ce que** le système de cuisson (20) comprend en outre un premier capteur de détection de couvercle (140) configuré pour détecter une condition fermée entre le premier couvercle et le boîtier ;
et **en ce que**, dans ledit mode de cuisson par conduction, le système de cuisson peut être mis en opération en tant qu'au moins un autocuiseur.

2. Système de cuisson (20) de la revendication 1, dans lequel, dans ledit second mode, ledit système de cuisson (20) peut être mis en opération en tant qu'au moins un dispositif parmi une friteuse à air chaud, un four de cuisson/rôtissoire, un grilloir, et un dessiccateur.

3. Système de cuisson (20) de la revendication 1 ou 2, dans lequel, dans ledit premier mode, ledit système de cuisson (20) peut être mis en opération en tant qu'au moins un dispositif parmi une mijoteuse, une marmite à vapeur, une surface de saisie, et une surface sauteuse.

4. Système de cuisson (20) d'une quelconque revendication précédente, comprenant en outre un couvercle secondaire (37) reliable audit boîtier (22) pour assurer l'étanchéité dudit intérieur creux (30).

5. Système de cuisson (20) de la revendication 4, dans lequel ledit couvercle secondaire (37) forme un dispositif d'étanchéité hermétique à la pression avec ledit boîtier (22).

6. Système de cuisson (20) de la revendication 4 ou 5, dans lequel ledit premier couvercle (32) est mobile entre ladite position ouverte et ladite position fermée lorsque ledit couvercle secondaire (37) est apposé sur ledit boîtier (22).

7. Système de cuisson (20) de quelconques des revendications 4 à 6, dans lequel ledit premier couvercle (32) est dans ladite position ouverte lorsque ledit couvercle secondaire (37) est apposé sur ledit boîtier (22).

8. Système de cuisson (20) d'une quelconque revendication précédente, dans lequel le système de cuisson (20) peut être mis en opération dans le premier mode avec le premier couvercle (32) dans ladite position fermée.

9. Système de cuisson (20) d'une quelconque revendication précédente, dans lequel le système de cuisson (20) peut être mis en opération dans le premier mode avec le premier couvercle (32) dans ladite position fermée pour réaliser au moins une action parmi mijoter, cuire à la vapeur, saisir, et sauter.

10. Système de cuisson (20) d'une quelconque revendication précédente, comprenant en outre un dispositif de mouvement d'air (86), dans lequel le second élément chauffant (84) est configuré pour chauffer de l'air quand il passe à travers le dispositif de mouvement d'air (86).

11. Système de cuisson (20) de la revendication 10, dans lequel le dispositif de mouvement d'air (86) est un ventilateur à vitesse variable pouvant être mis en opération à une pluralité de vitesses de rotation, et la vitesse du dispositif de mouvement d'air (86) est agencée pour varier sur la base de l'opération de cuisson sélectionnée.

12. Système de cuisson (20) d'une quelconque revendication précédente, comprenant ladite unité de commande (102), dans lequel l'unité de commande (102) est agencée pour employer un contrôle logique pour détecter une condition fermée du premier couvercle (32) et empêcher une alimentation électrique de circuler jusqu'au premier élément chauffant (82).

13. Système de cuisson (20) de quelconques des revendications 4 à 7, comprenant en outre un second système de détection de couvercle (142), ledit second système de détection de couvercle (142) incluant un commutateur à lame ou capteur (144) à un arrière du boîtier (22) et un aimant (146) dans une section correspondante du second couvercle (37).

14. Système de cuisson (20) de la revendication 13, comprenant ladite unité de commande (102) ; dans lequel, lorsque le second couvercle (37) est dans une première condition, l'unité de commande (102) est agencée pour employer un contrôle logique pour détecter une condition activée du commutateur à lame ou capteur (144) et terminer l'alimentation électrique au moins aux premier et second éléments chauffants (82, 84) ;
la première condition étant au moins une des conditions suivantes
(i) lorsque le second couvercle (37) est dans une configuration lâchée dessus, ou
(ii) lorsque le second couvercle (37) est partiellement en prise sur le boîtier (22).

15. Système de cuisson (20) de la revendication 13 ou de la revendication 14, comprenant ladite unité de commande (102), et comprenant en outre une unité d'affichage (92) pour recevoir des entrées (94) pour lesdites opérations de cuisson ; dans lequel, lorsqu'une condition fermée du second couvercle (37) est détectée en utilisant le commutateur à lame ou capteur (144), l'unité de commande (102) est agencée pour désactiver toutes les entrées (94) pour lesdites opérations de cuisson par convection.
